# EUROPÄISCHE PATENTSCHRIFT

(11) **EP 2 847 538 B1**
(45) Veröffentlichungstag und Bekanntmachung des Hinweises auf die Patenterteilung: **03.06.2020**
(21) Anmeldenummer: 13721688.3
(22) Anmeldetag: 06.05.2013
(51) Int. Cl.: G01S 7/497, G01S 17/36, G01S 17/10, G01S 7/481, G01S 17/66, G01S 17/42, G01S 7/491, G01B 9/02

(54) **MESSGERÄT MIT EINEM INTERFEROMETER UND EINEM EIN DICHTES LINIENSPEKTRUM DEFINIERENDEN ABSORPTIONSMEDIUM**
MEASURING APPARATUS COMPRISING AN INTERFEROMETER AND AN ABSORPTION MEDIUM DEFINING A DENSE LINE SPECTRUM
APPAREIL DE MESURE COMPORTANT UN INTERFÉROMÈTRE ET UN MILIEU D'ABSORPTION DENSE DÉFINISSANT UN SPECTRE DE RAIES

(30) Priorität: 07.05.2012 EP 12166955
(43) Veröffentlichungstag der Anmeldung: 18.03.2015
(73) Patentinhaber: Leica Geosystems AG, 9435 Heerbrugg (CH)
(72) Erfinder: LÜTHI, Thomas, CH-5000 Aarau (CH); BÖCKEM, Burkhard, CH-5415 Rieden AG (CH); SALVADÉ, Yves, CH-2610 St. Imier (CH)
(74) Vertreter: Kaminski Harmann
(86) Internationale Anmeldenummer: PCT/EP2013/059375
(87) Internationale Veröffentlichungsnummer: WO 2013/167525

(56) Entgegenhaltungen:
- EP-A1- 2 128 561
- EP-A2- 0 933 845
- DE-A1- 10 202 759
- US-A- 5 123 742
- US-A1- 2011 122 906
- US-A1- 2011 211 198

## Beschreibung

Die Erfindung betrifft ein Messgerät mit einem Interferometer nach dem Oberbegriff des Anspruchs 1 und ein Kalibrierverfahren für und mit einem Interferometer nach dem Oberbegriff des Anspruchs 11.

Für Messungen im Bereich der optischen Messtechnik werden häufig wellenlängenstabilisierte Gaslaser (HeNe-Laser) als Lichtquelle eingesetzt. Diese weisen im Wesentlichen eine hohe Wellenlängenstabilität (je nach Stabilisationsmethode) und eine grosse Kohärenzlänge von einigen hundert Metern auf. Dadurch sind diese Strahlquellen insbesondere geeignet für die Verwendung als Frequenz- und Wellenlängennormal und ermöglichen für interferometrische Messsysteme hohe Messreichweiten. Typische Anwendungen umfassen z.B. lineare Interferometer, Wellenlängennormal, Vibrometer und die Verwendung als Interferometerlichtquelle in einem Lasertracker.

Nachteilig an der Verwendung von Gaslaserquellen (HeNe-Laserlichtquellen) ist im Hinblick auf eine allgemein angestrebte Miniaturisierung, insbesondere von Lasertrackern, jedoch deren die Lichtleistung bestimmende Grösse. Die Leistung der Lichtquelle hängt dabei signifikant von der Länge der Laserröhre ab, d.h. je länger die Röhre desto grösser die erreichbare Emissionsleistung. Zudem zeigt eine derartige Laserquelle gewöhnlich eine relativ grosse Leistungsdissipation. Einen weiteren Nachteil stellt die für den Betrieb benötigte Hochspannungsversorgung dar. Beispielsweise muss für die Zündung des Lasers eine Spannung von ca. 7'000V und während des Betriebs eine Spannung von ca. 1'500V bereitgestellt werden, wodurch bei der Verwendung solcher Lichtquellen spezielle Komponenten (z.B. Hochspannungsnetzteil und Abschirmung) eingesetzt und Sicherheitsmassnahmen getroffen werden müssen. Auch die Empfindlichkeit gegenüber Magnetfeldern (z.B. erzeugt durch interne Motoren oder externe Schweisstrafos) und die begrenzte Lebensdauer der Röhren (typischerweise ca. 15'000 Betriebsstunden) gestalten den Einsatz von HeNe-Lasern nachteilig - beispielsweise da die Lichtquellen oft kostspielig in den Systemen ersetzt werden müssen.

Alternative Lichtquellen sind in diesem Zusammenhang z.B. Laserdioden. Diese sind an sich kompakt, kostengünstig und haben einen geringen Leistungsverbrauch. Herkömmliche Fabry-Perot Laserdioden sind jedoch nicht als Interferometerlichtquelle geeignet, da diese eine verhältnismässig kleine Kohärenzlänge aufweisen und nicht (longitudinal) singlemodig emittieren (d.h. mit mehrere Wellenlängen emittieren).

Als Strahlquellen können jedoch z.B.
- Distributed Feedback Laser (DFB) (mit einem periodisch strukturierten aktiven Medium, z.B. Gitter),
- Distributed Bragg Reflector Laser (DBR) (mit einem optischen Gitter ausserhalb des aktiven Mediums aber auf einem gemeinsamen Chip angeordnet),
- Fiber Bragg grating laser (FBG) (im Wesentlichen gemäss einem DFB-Laser, jedoch mit einem Gitter in einer externen Faser),
- External Cavity Diode Laser (ECDL) (Stabilisierung der Laserdiode mittels einer externen hochstabilen Kavität z.B. mit einem holografischen Gitter),
- Diode pumped solid state lasers (DPSS),
- Discrete mode lasers (DMD) und/oder
- Microchip Laser
eingesetzt werden. Die Strahlquellen sind dabei derart ausgebildet, dass der emittierte Laserstrahl hinsichtlich der Wellenlänge singlemodig mit einer Kohärenzlänge in der Grössenordnung von mehreren 10m (bzw. einer Linienbreite < 1MHz) ist.

Für die Verwendung solcher Laserdioden als Interferometerlichtquelle oder als Wellenlängennormal ist zusätzlich eine Stabilisierung auf eine bekannte Wellenlänge erforderlich. Diese kann z.B. spektroskopisch auf eine Absorptionslinie eines Absorptionsmediums erfolgen (z.B. unter Verwendung einer Gaszelle). In Abhängigkeit des verwendeten Absorptionsmediums können dabei in einem gewünschten Wellenlängenbereich sehr viele Absorptionslinien auftreten. Einerseits liegen dann so viele Absorptionslinien vor, dass auch bei fertigungsbedingter Streuung der Emissionswellenlänge der Laserdiode stets eine Absorptionslinie zur Stabilisation erreichbar ist, andererseits muss diese Linie aber auch bei jedem Aufstarten der Lichtquelle zur Feststellung der Emissionswellenlänge eindeutig identifiziert werden.

Hierfür kann prinzipiell einfach auf irgendeine Linie stabilisiert und diese in der Produktion mit einem externen Wellenlängenmessgerät identifiziert werden. Werden die dazu eingestellten Diodenparameter wie z.B. Temperatur und Strom gespeichert und beim nächsten Einschalten wiederhergestellt, so sollte man bei perfekter Ansteuerelektronik wieder bei der ursprünglichen Line landen und diese mit einem kurzen Wellenlängenscan wieder finden. Eine eventuelle Veränderung der Einstellparameter der Diode durch Alterung kann durch Abspeicherung der jeweils letzten Werte abgefangen werden. Das Verfahren stellt jedoch hohe Ansprüche an die Qualität der Ansteuerelektronik und ist bei allfällig geringen Wellenlängenabständen der Absorptionslinien sehr anfällig.

Die Anforderungen an das Messgerät sind analog auf Messvorrichtungen übertragbar, welche eine Interferometereinheit zur Bestimmung von Entfernungsänderungen aufweisen. Dabei können Messvorrichtungen, die für eine fortlaufende Verfolgung eines Zielpunkts und eine koordinative Positionsbestimmung dieses Punkts ausgebildet sind, allgemein unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z.B. einer CCD- oder CID-Kamera (CCD = charge coupled device; CID = charge injection device) oder einer auf einem CMOS-Array basierenden Kamera, oder mit einem Pixelarraysensor und mit einer Bildverarbeitungseinheit ausgeführt sein. Der Lasertracker und die Kamera sind dabei insbesondere derart aufeinander montiert, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Insbesondere kann die Kamera über eine Fischaugen-Optik verfügen und somit ein Schwenken der Kamera aufgrund eines sehr grossen Bilderfassungsbereichs der Kamera vermieden oder zumindest eingeschränkt nötig sein. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lagen zueinander bekannt sind, kann auf eine Orientierung des Instruments und eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Ausserdem wird in modernen Trackersystemen - zunehmend standardisiert - auf einem Sensor (PSD) eine Ablage des empfangenen Messstrahls von einer Nullposition ermittelt. Als PSD ist in diesem Zusammenhang ein örtlich analog arbeitender Flächensensor zu verstehen, mit welchem ein Schwerpunkt einer Lichtverteilung auf der Sensorfläche bestimmt werden kann. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik kann das Ausgangssignal ausgewertet werden und der Schwerpunkt ermittelt werden. Die Ermittlung der Position des Schwerpunkts des auftreffenden Lichtpunkts kann dabei sehr schnell (Mikrosekundenbereich) und mit einer Nanometer-Auflösung erfolgen.

Mittels dieser PSD kann eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD vergleichsweise klein, d.h. korrespondierend zum Strahldurchmesser des Messlaserstrahls, gewählt. Eine Erfassung mit der PSD erfolgt koaxial zur Messachse, sodass die Erfassungsrichtung der PSD der Messrichtung entspricht.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt.

Die in diesem Zusammenhang für die Distanzmessung eingesetzten Interferometer können - aufgrund der grossen Kohärenzlänge und der damit ermöglichten Messreichweite - als Lichtquellen HeNe-Gaslaser oder aber oben erwähnte Laserdioden, welche genannte Vorteile hinsichtlich der Leistungsaufnahme und des Platzbedarfs bieten, aufweisen. Eine Kombination eines Absolutdistanzmessers und eines Interferometers zur Entfernungsbestimmung mit einem HeNe-Laser ist beispielsweise aus der WO 2007/079600 A1 bekannt. Eine Verwendung einer Laserdiode als Interferometer-Laserlichtquelle ist beispielsweise in der EP 2589982 beschrieben. Für eine verlässliche Distanzmessung bzw. eine Messung der Distanzänderung bei einer im Hinblick auf die genannten Vorteile anzustrebende Verwendung einer Laserdiode muss dabei die Wellenlänge der verwendeten Messstrahlung stabilisiert werden und genau bekannt sein. Dabei sind, wie oben erwähnt, hohe Anforderungen an die Qualität der Ansteuerelektronik gestellt, wobei diese bei allfällig geringen Wellenlängenabständen der Absorptionslinien sehr anfällig ist. Somit kann trotz einer Reproduktion von bekannten Ansteuerparametern und einer damit erzeugten stabilisierten Wellenlänge die abermals eingestellte Wellenlänge nicht mit absoluter Verlässlichkeit erzeugt werden. Insbesondere dann wenn z.B. zwei oder mehrere Absorptionslinien mit einem kleinen Linienabstand eng zusammen liegen und beim Aufstarten der Laserdiode zwar mit einer dieser Linien stabilisiert wird, jedoch die aktuell zur Stabilisierung genutzte Linie nicht mit Sicherheit bestimmt werden kann, ist eine genaue Bestimmung der Emissionswellenlänge nicht möglich.

Es ist daher eine Aufgabe der vorliegenden Erfindung ein verbessertes Messgerät, insbesondere Lasertracker, mit einem Interferometer bzw. ein Verfahren bereitzustellen, wobei Mittel zur Erzeugung einer Laserstrahlung zur Entfernungsmessung in ihrer Gesamtheit kompakt ausgebildet sind und eine geräteseitige Bestimmung bzw. Einstellung einer Emissionswellenlänge einer emittierten Laserstrahlung verlässlich und eindeutig durchführbar ist.

Eine spezielle Aufgabe der Erfindung ist es eine Messgerät, insbesondere Lasertracker, mit einem Mittel zur Stabilisierung der Emissionswellenlänge und einer abstimmbaren Laserdiode bereitzustellen, wobei eine aktuelle Emissionswellenlänge der Laserdiode eindeutig bestimmbar ist.

Eine weitere spezielle Aufgabe der vorliegenden Erfindung ist es ein Messgerät bereitzustellen, insbesondere einen Lasertracker, wobei eine eindeutige Identifizierung einer zur Stabilisierung verwendeten Absorptionslinie, insbesondere bei jedem Aufstarten des Systems, durchführbar ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Weitere, alternative Aspekte die Bestimmung einer Wellenlänge einer zur Interferometrie vorgesehen Diode in einem Lasertracker betreffend sind in der EP 2662702 beschrieben, welche einen identischen Anmeldetag wie die vorliegende Anmeldung aufweist.

Die Erfindung betrifft ein Messgerät mit einem Interferometer - genauer: ein Entfernungsmessgerät zur Bestimmung einer Entfernungsänderung zu einem Objekt mit einem Interferometer zur Erzeugung einer Interferometerausgangsgrösse für jeweilige Entfernungen zu dem Objekt - mit einer als Interferometer-Laserstrahlquelle derart ausgebildeten abstimmbaren Laserdiode zur Erzeugung einer Messstrahlung, dass die Messstrahlung longitudinal monomodig vorliegt und eine Emissionswellenlänge der Messstrahlung innerhalb eines bestimmten Wellenlängenbereichs mittels Variation von zumindest einem Abstimmparameter variierbar ist. Die Laserdiode ist dabei derart ausgebildet, dass die Wellenlänge innerhalb des Wellenlängenbereichs modehop-frei tunbar ist. Zudem ist ein innerhalb des Wellenlängenbereichs eine Vielzahl von bekannten Absorptionslinien definierendes Absorptionsmedium, ein Speicher mit einem innerhalb des Wellenlängenbereichs für jeweilige Absorptionswellenlängen jeweils eine Absorptionsstärke angebenden gespeicherten Linienatlas (Spektralatlas) für das Absorptionsmedium und ein Detektor zur Bestimmung der Absorptionsstärke vorgesehen. Weiters weist das Entfernungsmessgerät eine derart ausgebildete Steuerungs- und Auswerteeinheit auf, dass während einer Ausführung eines Entfernungsmessmodus eine Regelung der Emissionswellenlänge vermittels des zumindest einen Abstimmparameters in Abhängigkeit von der bestimmten Absorptionsstärke derart erfolgt, dass die Emissionswellenlänge stabil bleibt.

Die Steuerungs- und Auswerteeinheit ist ferner derart ausgebildet, dass bei Ausführung eines Kalibrierungsmodus eine Orientierung im Linienatlas (d.h. eine Identifikation eines Bereichs des Atlasses) dadurch erfolgt, dass gesteuert durch die Steuerungs- und Auswerteeinheit definierte Probemessungen mit einem Variieren von zumindest einem Messparameter durchgeführt werden und aus den Probemessungen Probemessergebnisse abgeleitet werden. Ausserdem erfolgt ein Vergleichen der Probemessergebnisse mit zumindest einer auf dem gespeicherten Linienatlas basierenden und für die definierten Probemessungen bekannten Referenz, wobei im Rahmen des Vergleichs die Probemessergebnisse mit zumindest der Referenz abgeglichen werden. In Abhängigkeit von dem Abgleichen und anhand eines algorithmischen Auswertens wird weiters die Orientierung im Linienatlas ermittelt. Die Emissionswellenlänge der Messstrahlung ist in Abhängigkeit von der ermittelten Orientierung im Linienatlas bestimmbar und/oder setzbar, insbesondere wobei bei einem In-Betrieb-Nehmen des Entfernungsmessgeräts automatisch gesteuert durch die Steuerungs- und Auswerteeinheit der Kalibrierungsmodus ausgeführt wird und die dabei bestimmte Orientierung im Linienatlas zur Ausführung des Messmodus gespeichert wird.

Mittels dieses Kalibrierungsmodus kann somit eine eindeutige Zuordnung einer vorliegenden zunächst unbekannten Wellenlänge einer Messstrahlung in einem Linienatlas durch einen Abgleich mit zumindest einer Referenz (z.B. Linienatlas) erfolgen, sodass die Wellenlänge bestimmt werden kann und dadurch bekannt ist.

Als Laserdiode sind im Rahmen der vorliegenden Erfindung zumindest
- Distributed Feedback Laser (DFB) (mit einem periodisch strukturierten aktiven Medium, z.B. Gitter),
- Distributed Bragg Reflector Laser (DBR) (mit einem optischen Gitter ausserhalb des aktiven Mediums aber auf einem gemeinsamen Chip angeordnet),
- Fiber Bragg grating laser (FBG) (im Wesentlichen gemäss einem DFB-Laser, jedoch mit einem Gitter in einer externen Faser),
- External Cavity Diode Laser (ECDL) (Stabilisierung der Laserdiode mittels einer externen hochstabilen Kavität z.B. mit einem holografischen Gitter),
- Diode pumped solid state lasers (DPSS),
- Discrete mode lasers (DMD),
- Microchip Laser und/oder
- Diodenlaser
zu verstehen. Alternative Laserdioden-Ausführungen werden jedoch explizit nicht ausgeschlossen. Die Dioden können dabei derart ausgebildet sein, dass der emittierte Laserstrahl mit einer Kohärenzlänge in der Grössenordnung von mindestens 10m (bzw. einer Linienbreite <1MHz) erzeugt wird. In diesem Zusammenhang kann zur Erzeugung der Messstrahlung eine wellenlängenselektive Komponente vorgesehen sein, insbesondere ein optisches Gitter.

Insbesondere kann mit einer speziellen Ausführungsform des Entfernungsmessgeräts erfindungsgemäss im Rahmen der Probemessungen die Emissionswellenlänge als Messparameter variiert und dabei die Absorptionsstärke mittels des Detektors fortlaufend erfasst werden. Im Speziellen erfolgt dies bei Ausführung des Kalibrierungsmodus gesteuert durch die Steuerungs- und Auswerteeinheit mittels Variation des zumindest einen Abstimmparameters.

In diesem Zusammenhang können weiters erfindungsgemäss - insbesondere wiederum bei Ausführung des Kalibrierungsmodus durch die Steuerungs- und Auswerteeinheit - durch das fortlaufende Erfassen der Absorptionsstärke messparameterabhängige Probeabsorptionslinien als Probemessergebnisse bestimmt werden.

Im Rahmen der Erfindung kann ausserdem die Orientierung im Linienatlas in Abhängigkeit von einem Übereinstimmen der messparameterabhängigen Probeabsorptionslinien mit den bekannten Absorptionslinien bestimmt werden, insbesondere mittels einer Kreuzkorrelation aus den messparameterabhängigen Probeabsorptionslinien und den bekannten Absorptionslinien und/oder mittels Ausgleichsrechnung. Diese Bestimmung der Orientierung erfolgt im Besonderen bei Ausführung des Kalibrierungsmodus durch die Steuerungs- und Auswerteeinheit.

Die Identifikation der verwendeten Absorptionslinie kann somit durch einen kurzen Wellenlängenscan mit der Laserdiode (abstimmbar bzw. tune-bar durch eine Änderung von Strom und/oder Temperatur) und einer gleichzeitigen Aufnahme des dabei resultierenden Absorptionsspektrums erfolgen. Durch Vergleich des beobachteten Ausschnitts des Absorptionsspektrums - wobei die Wellenlängen dabei noch unbekannt sind - mit einem bekannten Absorptionsspektrum (Linienatlas mit Absorption als Funktion der Wellenlänge) für das in der Absorptionszelle verwendete Gas können die beobachteten Linien durch das Ermitteln einer Orientierung im Linienatlas (ermitteln eines Bereichs im Atlas) identifiziert und damit Wellenlängen zugewiesen werden. Dieser Vergleich kann beispielsweise durch Kreuzkorrelation erfolgen.

Bedingung für das Verfahren ist, dass die Wellenlänge der Diode über einen ausreichend grossen Abstimmbereich (z.B. 0,1 nm) modehop-frei tunbar ist, wobei der tatsächlich benötigte Wellenlängenbereich auch davon abhängen kann, wie gut eine Startwellenlänge bekannt ist, d.h. wie gut zuletzt eingestellte Betriebsparameter der Laserdiode reproduziert werden können.

Das Dioden-Startverfahren kann dabei derart gestaltet sein, dass zuerst die beim letzten Ausschalten vorliegenden Betriebsparameter wiederhergestellt werden, womit die Wellenlänge mit einer gewissen Unsicherheit bekannt ist. Anschliessend wird der kurze Wellenlängenscan durchgeführt und die dabei detektierten Linien mittels Abgleichen, z.B. durch Kreuzkorrelation, mit dem bekannten Referenzspektrum, unter Verwendung der ungefähr bekannten Startwellenlänge, eindeutig identifiziert. Auf dieser Basis kann die Stabilisierung auf die ausgewählte Absorptionslinie erfolgen.

Insbesondere kann erfindungsgemäss ein Abstandsvergleich von Abständen der Probeabsorptionslinien mit bekannten Abständen der Absorptionslinien erfolgen und die Orientierung im Linienatlas unter Berücksichtigung des Abstandsvergleichs bestimmt werden und/oder es kann für jede Probeabsorptionslinie aus den messparameterabhängigen Probeabsorptionslinien die Absorptionsstärke bestimmt werden und die Orientierung im Linienatlas unter Berücksichtigung der bestimmten Absorptionsstärke bestimmt werden. Auch diese Schritte erfolgen insbesondere bei Ausführung des Kalibrierungsmodus durch die Steuerung- und Auswerteeinheit.

Ein Abgleichen der Probemessergebnisse mit der Referenz bzw. mit dem Linienatlas zur Ermittlung der Orientierung im Linienatlas kann somit durch ein Vergleichen der jeweiligen Linienabstände bzw. durch ein Vergleichen von jeweiligen Absorptionsniveaus für die Linien erfolgen.

Ein anderer erfindungsgemässer Aspekt hinsichtlich der Ausführung des Kalibrierungsmodus des Entfernungsmessgeräts betrifft das Variieren einer Entfernung zum Objekt als Messparameter im Rahmen der Probemessungen. Die Probemessungen erfolgen hierbei bei zumindest zwei unterschiedlichen, bekannten Entfernungen zum Objekt, ein Bestimmen einer Interferometerausgangsgrösse als Probemessergebnis erfolgt mit dem Interferometer für jede der zumindest zwei unterschiedlichen Entfernungen zum Objekt und das Ermitteln der Orientierung im Linienatlas, insbesondere eine Bestimmung der Emissionswellenlänge, erfolgt basierend auf den bekannten Entfernungen, den Interferometerausgangsgrössen und der Vielzahl von bekannten Absorptionslinien.

Im Speziellen kann das Entfernungsmessgeräterfindungsgemäss eine Absolutdistanzmesseinheit aufweisen und die zumindest zwei unterschiedlichen, bekannten Entfernungen zum Objekt können durch eine Entfernungsbestimmung mittels der Absolutdistanzmesseinheit bestimmt werden.

Wird bei gleichzeitigen Messungen von Interferometer und Absolutdistanzmesser z.B. ein Retroreflektor trackend (Interferometer ist dauernd auf dem Ziel) verschoben, so kann aus den gemessenen Distanzunterschieden der beiden Distanzmesser, den beiden (bekannten) Grobwellenlängen und unter Kenntnis der atmosphärischen Daten Druck, Feuchte und Temperatur die Wellenlänge der auf eine unbekannte Linie stabilisierten Messstrahlung für das Interferometer auf wenige Picometer (pm) genau abgeschätzt werden, wodurch die verwendete Stabilisierungslinie unter Verwendung des Spektralatlasses (Linienatlasses) für das jeweilige Absorptionsmedium identifiziert werden kann.

In einer bestimmten Ausführungsform des Entfernungsmessgeräts kann das Entfernungsmessgerät erfindungsgemäss als Lasertracker zur fortlaufenden Verfolgung des als Ziel ausgebildeten Objekts und zur Positionsbestimmung des Ziels ausgebildet sein. Das Entfernungsmessgerät kann aufweisen die Laserdiode zur Erzeugung der Messstrahlung mit einer Kohärenzlänge von mindestens 10m, insbesondere mindestens 50m, eine eine Stehachse definierende Basis, eine Strahllenkeinheit zur Emission der Messstrahlung und zum Empfang der am Ziel reflektierten Messstrahlung, wobei die Strahllenkeinheit um die Stehachse und eine im Wesentlichen orthogonal zur Stehachse stehende Neigungsachse relativ zur Basis motorisiert schwenkbar ist, und eine Winkelmessfunktionalität zur Bestimmung einer Ausrichtung der Strahllenkeinheit relativ zur Basis.

Der Lasertracker kann erfindungsgemäss weiters aufweisen eine um die Stehachse relativ zur Basis motorisiert schwenkbare und die Neigungsachse definierende Stütze und eine als Strahllenkeinheit ausgebildete, um die Neigungsachse relativ zur Stütze motorisiert schwenkbare Anzieleinheit mit einer Teleskopeinheit zur Emission der Messstrahlung und zum Empfang von zumindest einem Teil der am Ziel reflektierten Messstrahlung.

Um Messfehler bedingt durch eine fehlerhaft angenommene Wellenlänge zu vermeiden, kann eine eindeutige Identifizierung einer (z.B. zur Stabilisierung verwendeten) Absorptionslinie bei jedem Aufstarten des Systems bzw. des Laserrackers erfolgen. Mit einem Lasertracker kann dies gemäss des erfindungsgemässen Kalibrieriens durch Ausnützen des zusätzlich zum Interferometer vorhandenen Absolutdistanzmessers unter einem aktiven Mitwirken eines Benutzers gelöst werden, indem der Benutzer das fortlaufend angemessene Ziel versetzt und dadurch jeweils unterschiedliche Entfernung zum Ziel bereitstellt.

Ein weiterer Aspekt der Erfindung betrifft die Wahl des Absorptionsmediums. Dieses kann in Abhängigkeit von der geforderten bzw. gewünschten Emissionswellenlänge gewählt werden. Das Entfernungsmessgerät kann in diesem Zusammenhang erfindungsgemäss eine das Absorptionsmedium aufweisende Absorptionszelle aufweisen, insbesondere wobei Jodgas das Absorptionsmedium bildet und die Emissionswellenlänge zwischen 500nm und 650nm, insbesondere zwischen 630nm und 635nm, liegt.

Jod als Absorptionsmedium weist einen insbesondere für Lasertracker attraktiven Wellenlängenbereich mit einer Vielzahl von Absorptionslinien um 633 nm auf. Dadurch sind so viele Absorptionslinien definiert, dass auch bei fertigungsbedingter Streuung der Emissionswellenlänge der Laserdiode stets eine Absorptionslinie zur Stabilisation in der Nähe liegt, jedoch muss diese bei jedem Aufstarten der Lichtquelle eindeutig identifiziert werden.

Hinsichtlich des Abstimmens der Emissionswellenlänge kann ausserdem die Emissionswellenlänge erfindungsgemäss durch eine Änderung einer Temperatur der Laserdiode als Abstimmparameter und/oder durch eine Änderung eines an der Laserdiode anliegenden elektrischen Stroms als Abstimmparameter gesteuert durch die Steuerungs- und Auswerteeinheit variierbar sein.

Zur Steuerung der Emissionswellenlänge beim Starten des Messgeräts kann erfindungsgemäss die Steuerungs- und Auswerteeinheit derart ausgebildet sein, dass bei einem In-Betrieb-Nehmen des Entfernungsmessgeräts für eine Einstellung der Emissionswellenlänge vorgesehene Abstimmparameter für die Laserdiode derart gesetzt werden, dass durch die gesetzten Abstimmparameter ein vorheriger Betriebszustand im Wesentlichen reproduziert wird, insbesondere ein letzter vorheriger Betriebszustand im Wesentlichen reproduziert wird.

Des Weiteren weist das Entfernungsmessgerät insbesondere einen Interferometer-Detektor zur Detektion der Messstrahlung und zur darauf basierenden Erzeugung der Interferometerausgangsgrösse für jeweilige Entfernungen zu dem Objekt auf.

Die Erfindung betrifft ausserdem ein Kalibrierverfahren für und mit einem Interferometer eines Entfernungsmessgeräts zur Bestimmung einer Entfernungsänderung zu einem Objekt mit einer als Interferometer-Laserstrahlquelle derart ausgebildeten abstimmbaren Laserdiode zum Erzeugen einer Messstrahlung, dass die Messstrahlung longitudinal monomodig vorliegt und eine Emissionswellenlänge der Messstrahlung innerhalb eines bestimmten Wellenlängenbereichs mittels Variation von zumindest einem Abstimmparameter variierbar ist, und mit einem innerhalb des Wellenlängenbereichs eine Vielzahl von bekannten Absorptionslinien definierenden Absorptionsmedium. Zudem sind ein Speicher mit einem innerhalb des Wellenlängenbereichs für jeweilige Absorptionswellenlängen jeweils eine Absorptionsstärke angebenden gespeicherten Linienatlas für das Absorptionsmedium und ein Detektor zum Bestimmen der Absorptionsstärke vorgesehen.

Im Rahmen des Kalibrierverfahrens werden definierte Probemessungen mit einem Variieren von zumindest einem Messparameter durchgeführt, aus den Probemessungen Probemessergebnisse abgeleitet, erfolgt ein Vergleichen der Probemessergebnisse mit zumindest einer auf dem gespeicherten Linienatlas basierenden und für die definierten Probemessungen bekannten Referenz, wobei im Rahmen des Vergleichs die Probemessergebnisse mit zumindest der Referenz abgeglichen werden, und wird in Abhängigkeit von dem Abgleichen und anhand eines algorithmischen Auswertens eine Orientierung im Linienatlas ermittelt.

Ein weiterer Aspekt der Erfindung betrifft ein Verfahren zum Bestimmen einer Entfernungsänderung zu einem Objekt mit einem Interferometer eines Entfernungsmessgeräts zur Erzeugung einer Interferometerausgangsgrösse für jeweilige Entfernungen zu dem Objekt mit einer als Interferometer-Laserstrahlquelle derart ausgebildeten abstimmbaren Laserdiode zum Erzeugen einer Messstrahlung, dass die Messstrahlung longitudinal monomodig vorliegt und eine Emissionswellenlänge der Messstrahlung innerhalb eines bestimmten Wellenlängenbereichs mittels Variation von zumindest einem Abstimmparameter variierbar ist, einem innerhalb des Wellenlängenbereichs eine Vielzahl von bekannten Absorptionslinien definierenden Absorptionsmedium, einem Speicher mit einem innerhalb des Wellenlängenbereichs für jeweilige Absorptionswellenlängen jeweils eine Absorptionsstärke angebenden gespeicherten Linienatlas für das Absorptionsmedium und einem Detektor zum Bestimmen der Absorptionsstärke.

Dabei wird ein erfindungsgemässes Kalibrierverfahren ausgeführt und in einem Entfernungsmessmodus erfolgt ein Regeln der Emissionswellenlänge vermittels des zumindest einen Abstimmparameters in Abhängigkeit von der Absorptionsstärke derart, dass die Emissionswellenlänge während eines bestimmten Messintervalls stabil bleibt, wobei ein Bestimmen und/oder Setzen der Emissionswellenlänge der Messstrahlung in Abhängigkeit von der ermittelten Orientierung im Linienatlas erfolgt. Zudem wird in dem Entfernungsmessmodus die Entfernungsänderung zu dem Objekt mittels der Interferometerausgangsgrösse bestimmt.

Erfindungsgemäss kann im Rahmen des Kalibrierverfahrens bzw. des Verfahrens zum Bestimmen einer Entfernungsänderung die Emissionswellenlänge der Messstrahlung als Messparameter variiert werden und dabei die Absorptionsstärke fortlaufend erfasst werden.

Insbesondere können erfindungsgemäss durch das fortlaufende Erfassen der Absorptionsstärke messparameterabhängige Probeabsorptionslinien als Probemessergebnisse bestimmt werden und/oder es kann die Orientierung im Linienatlas in Abhängigkeit von einem Übereinstimmen der messparameterabhängigen Probeabsorptionslinien mit den bekannten Absorptionslinien erfolgen, insbesondere mittels einer Kreuzkorrelation aus den messparameterabhängigen Probeabsorptionslinien und den bekannten Absorptionslinien und/oder mittels Ausgleichsrechnung.

Erfindungsgemäss können im Rahmen des Kalibrierverfahrens bzw. des Verfahrens zum Bestimmen einer Entfernungsänderung alternativ im Rahmen der Probemessungen eine Entfernung zu einem Objekt als Messparameter variiert werden, die Probemessungen bei zumindest zwei unterschiedlichen, bekannten Entfernungen zum Objekt erfolgen, ein Bestimmen einer Interferometerausgangsgrösse als Probemessergebnis für jede der zumindest zwei unterschiedlichen Entfernungen zum Objekt mittels des Interferometers erfolgen und die Orientierung im Linienatlas, insbesondere das Bestimmen und/oder Setzen der Emissionswellenlänge, basierend auf den bekannten Entfernungen, den Interferometerausgangsgrössen und der Vielzahl von bekannten Absorptionslinien erfolgen.

Insbesondere können dabei erfindungsgemäss die zumindest zwei unterschiedlichen, bekannten Entfernungen zum Objekt durch ein Entfernungsbestimmen mittels einer Absolutdistanzmesseinheit bestimmt werden.

Die Erfindung betrifft ausserdem ein Computerprogrammprodukt, das auf einem maschinenlesbaren Träger gespeichert ist, zur Steuerung des Durchführens von Probemessungen eines erfindungsgemässen Verfahrens. Zudem ist das Computerprogrammprodukt zur Ausführung des Ableitens von Probemessergebnissen aus den Probemessungen, des Vergleichens der Probemessergebnisse mit zumindest einer Vielzahl von bekannten Absorptionslinien, des Bestimmens der Orientierung im Linienatlas und des Bestimmens und/oder Setzens der Emissionswellenlänge eines erfindungsgemässen Verfahrens konfiguriert, insbesondere wenn das Computerprogrammprodukt auf einer Steuerungs- und Auswerteeinheit eines erfindungsgemässen Entfernungsmessgeräts ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Ausführungsform eines erfindungsgemässen Entfernungsmessgeräts mit einem optischen Aufbau;
- Fig.2: das Prinzip einer Stabilisierung einer Emissionswellenlänge mittels synchroner Detektion;
- Fig.3: das Prinzip der "side-of-line"-Methode zur Stabilisierung einer Emissionswellenlänge;
- Fig.4: eine Ausführungsform eines regelbaren Lasermoduls für ein erfindungsgemässes Entfernungsmessgerät mit einer Laserstrahlquelle, einer Absorptionszelle und einer Steuerung- und Auswerteeinheit;
- Fig.5: ein Blockdiagramm für den Ablauf eines erfindungsgemässen Kalibrierens;
- Fig.6a-d: eine erste Ausführung eines erfindungsgemässen Kalibrierens mit einem Entfernungsmessgerät;
- Fig.7: eine Ausführungsform für einen erfindungsgemässen Lasertracker mit einer weiteren Ausführung eines erfindungsgemässen Kalibrierens.

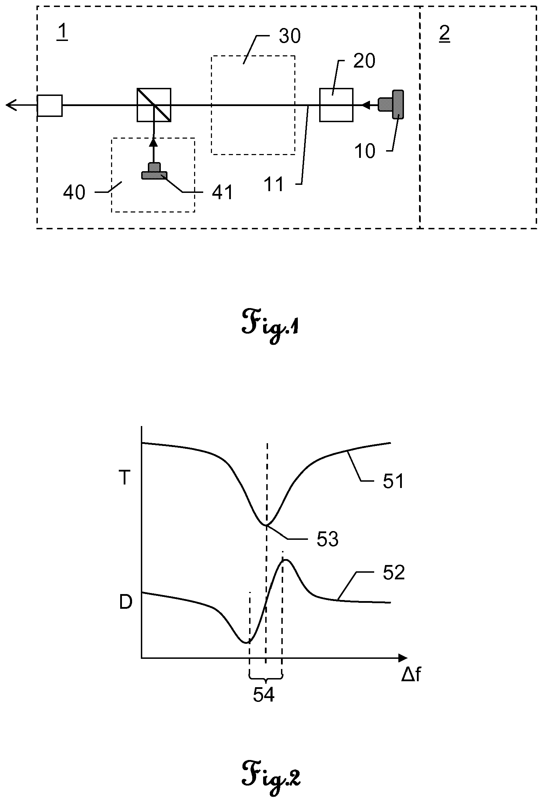

Figur 1 zeigt eine Ausführungsform eines erfindungsgemässen Entfernungsmessgeräts mit einem optischen Aufbau 1 mit einer als Interferometer-Strahlquelle ausgeführten Laserdiode 10, einer Absorptionszelle 20, einer Interferometereinheit 30 und einer Absolutdistanzmesseinheit 40, welche eine weitere Strahlquelle 41, insbesondere ausgeführt als Laserdiode oder SLED, aufweist. Mit der Laserdiode wird eine Messstrahlung 11 für das Interferometer 30 zur Bestimmung von Entfernungsänderungen zu einem Objekt bereitgestellt, wobei mit der Absolutdistanzmesseinheit 40 absolute Entfernungen zu Objekten bestimmt werden können. Ausserdem ist eine Steuerungs- und Auswerteeinheit 2 zumindest zur Steuerung der Laserdiode 10 vermittels einer Temperatur- und Stromregulierung und zur Auswertung von Signalen der Absorptionszelle 20 gezeigt. Ferner können damit durch die Interferometereinheit 30 und die Absolutdistanzmesseinheit 40 erzeugte Messdaten (z.B. bestimmte Entfernungen oder Interferometerausgangsgrössen) verarbeitet werden.

Mittels der Absorptionszelle 20 wird im Rahmen eines Stabilisierungsmodus eine Stabilisierung der Messstrahlung auf ein Wellenlängennormal, d.h. hier auf eine Absorptionslinie (z.B. ca. 633nm), welche durch ein Absorptionsmedium der Absorptionszelle 20 definierte wird (z.B. Jod, I₂), realisiert. Insbesondere sind zur Stabilisierung unterschiedliche Stabilisierungsansätze heranziehbar, so z.B. Synchrondetektion ("synchronous detection": Modulation der optischen Frequenz um eine zentrale Absorptionslinie), "side of line" - Methode oder Stabilisation mittels des Zeeman-Effekts bei konstanter optischer Frequenz (mit magnetischer Modulation).

Im Rahmen der synchronen Detektion (vgl. Figur 2) wird eine fortlaufende Wellenlängenänderung (und damit einer Änderung einer auf dieser Basis gemessenen Distanz) erzeugt, welche sich primär in einem erhöhten Distanzrauschen bemerkbar macht, wobei das Distanzrauschen jedoch durch eine erhöhte Messrate und anschliessende Integration oder synchronisierte Distanzmessung weitgehend eliminiert werden kann.

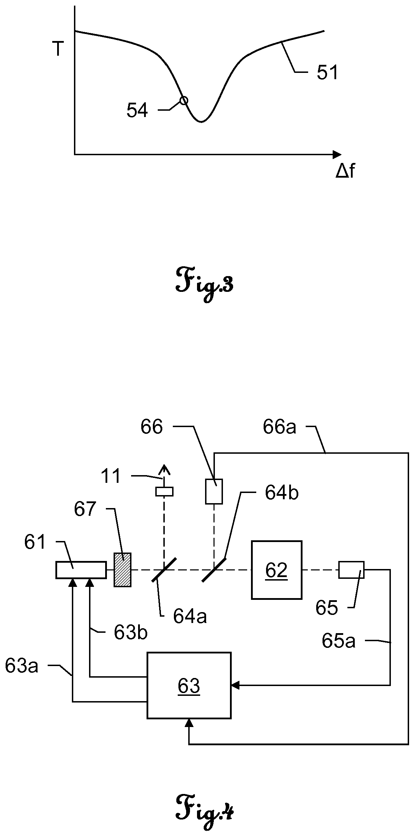

Die "side of line" - Methode (vgl. Figur 3) basiert auf einer Stabilisation mittels Absorption bei einem Absorptionswert, welcher im Wesentlichen der maximalen Steigung einer korrespondierenden Absorptionslinie einer typischerweise als Gaszelle ausgebildeten Absorptionszelle 20 entspricht (z.B. Stabilisation bei ca. 40% Absorption). Da die Absorption einer Linie vom Gasdruck des Absorptionsmediums (z.B. Jodgas) und damit von der Temperatur der Absorptionszelle abhängt, muss hierbei die Temperatur der Absorptionszelle 20 sehr konstant gehalten werden.

Generell wird für die Stabilisation von der Laserdiode 10 Laserlicht mit einen modehop-frei abstimmbaren (tuneable) Wellenlängenbereich bereitgestellt, so dass auf die gewünschte Absorptionslinie wellenlängenmässig abgestimmt werden kann. Das erzeugte Laserlicht weist zudem eine grosse Kohärenzlänge, insbesondere mindestens 10m, vorzugsweise mindestens 50m, auf.

Das Abstimmen der Emissionswellenlänge der Laserdiode 10 erfolgt dabei durch eine Regelung des an der Diode 10 anliegenden elektrischen Stroms und/oder der Temperatur der Diode 10 (vgl. Figur 4) mittels der Steuerungs- und Auswerteeinheit 2.

Zur Einstellung bzw. Identifikation der Emissionswellenlänge wird erfindungsgemäss eine Kalibrierung des Entfernungsmessgeräts durchgeführt. Hierfür wird zunächst eine definierte Probemessung ausgeführt. Diese Probemessung kann zum einen bestehen aus einer Absorptionsmessung mittels der Absorptionszelle 20, wobei die Emissionswellenlänge der Messstrahlung 11 gesteuert durch die Steuerungs- und Auswerteeinheit 2 variiert wird. Das Variieren der Emissionswellenlänge kann dabei durch eine Variation des an der Diode 10 anliegenden elektrischen Stroms und/oder der Temperatur der Diode 10 erfolgen. Als Messergebnis kann dabei ein Absorptionsverhalten (z.B. eine Absorptionsstärke) in Abhängigkeit von variiertem Strom und/oder Temperatur der Diode fortlaufend erfasst werden (Absorptionslinien). Andererseits kann die Probemessung vorgenommen werden bei einer Variation einer Entfernung zum Objekt, wobei als Messergebnis mittels der Interferometereinheit 30 jeweils eine Interferometerausgangsgrösse bestimmt wird und ferner die Entfernung zum Objekt z.B. mittels der Absolutdistanzmesseinheit 40 gemessen wird.

Durch ein Vergleichen der jeweiligen Messergebnisse - Absorptionsverhalten oder Interferometerausgangsgrössen - mit zumindest einer auf einem gespeicherten Linienatlas basierenden und für die definierten Probemessungen bekannten Referenz wird im Rahmen der Kalibrierung eine Orientierung im Linienatlas bestimmt, wobei der Linienatlas innerhalb des Abstimmwellenlängenbereichs für jeweilige Absorptionswellenlängen jeweils eine Absorptionsstärke angibt. Die Orientierung wird im Rahmen des Vergleichs in Abhängigkeit von einem Abgleichen der Probemessergebnisse mit zumindest der Referenz bestimmt. Die Referenz kann dabei beispielsweise verkörpert sein durch jeweilige durch den Linienatlas definierte und bekannte Absorptionsstärken für die Absorptionswellenlängen.

Im Fall eines Bestimmens einer Absorptionsstärke in Abhängigkeit der Wellenlänge bei variierender Emissionswellenlänge kann durch den Abgleich ein bestimmter Bereich des Linienatlas identifiziert werden, welcher mit dem detektierten Absorptionsspektrum zumindest im Wesentlichen übereinstimmt. Dabei kann das Abgleichen mittel eines "best-fit", einer Kreuzkorrelation oder mittels einer anderen Art von Ausgleichsrechnung erfolgen. Durch dieses erfolgte Identifizieren ist eine Zuordnung von Wellenlängen zum detektierten Absorptionsspektrum möglich. Ist ein solcher Bereich im Linienatlas identifiziert (also die Orientierung bestimmt) kann durch eine Steuerung bzw. Regelung der Laserdiode die Emissionswellenlänge in Abhängigkeit einer bekannten Absorptionsstärke (aus dem Linienatlas) eingestellt werden. Aus der zusätzlich aus dem Linienatlas bekannten Abhängigkeit der Absorptionsstärken von der Wellenlänge kann weiters die exakte Wellenlänge der Emissionswellenlänge abgeleitet werden.

Wird zu mehreren unterschiedlichen Entfernungen zum Objekt jeweils eine Interferometerausgangsgrösse bestimmt, so kann die Orientierung im Linienatlas unter Berücksichtigung der jeweils bei der Probemessung vorliegenden Entfernung zum Objekt, der bestimmten Interferometerausgangsgrössen und der Referenz (z.B. bekanntes Absorptionslinienspektrum für das verwendete Absorptionsmedium) bestimmt werden und daraus die Emissionswellenlänge bestimmt werden.

Figur 2 zeigt das Prinzip einer Stabilisierung der Emissionswellenlänge mittels synchroner Detektion (synchronous detection). Die Transmissionskurve 51 zeigt dabei das Transmissions- bzw. Absorptionsverhalten (Transmission = 1- Absorption) eines Absorptionsmediums über eine relative Frequenz Δf. Analog dazu wird die Ableitung 52 der Transmissionskurve 51 gezeigt, wobei diese zur Steuerung der Stabilisierung herangezogen wird. Im Absorptionsmaximum 53, welches einem Transmissionsminimum entspricht, ist die Steigung gleich "0" und nimmt mit einer zunehmenden Abweichung aus dem Absorptionsmaximum 53 hinsichtlich des Betrages schnell zu. Durch diese dadurch bei der Ableitung 52 im Bereich 54 entstehende steile Flanke kann durch eine fortlaufende Bildung der Ableitung aus einer fortlaufend gemessenen Absorption eine Veränderung der Absorption relativ zum Absorptionsmaximum 53 schnell und genau detektiert und erkannt werden. Mit dieser Information kann durch einen Regelkreis die Laserdiode so gesteuert werden, dass die Emissionswellenlänge der Messstrahlung fortlaufend innerhalb eines definierten Bereichs um das Absorptionsmaximum vorliegt. Eine jeweilige Abweichung der Emissionswellenlänge von dem Absorptionsmaximum 53 kann schnell und genau mittels der Ableitung 52 bestimmt und die Wellenlänge allfällig nachgeregelt werden. Hierfür kann beispielsweise ein Lock-In Verstärker eingesetzt werden.

Im Rahmen der synchronen Detektion wird die Emissionswellenlänge mit einer Modulationsfrequenz (Ditherfrequenz) für den an der Laserdiode anliegenden elektrischen Strom fortlaufend verändert, sodass die Emissionswellenlänge um das Absorptionsmaximum 53 (=Linienzentrum) "zittert" und damit eine weitgehende Stabilisierung erreicht wird. Das dadurch entstehende Distanzrauschen kann durch eine Filterung der Messsignale reduziert, insbesondere eliminiert, werden.

Figur 3 zeigt das Prinzip der "side-of-line"-Methode zur Stabilisierung der Emissionswellenlänge. Hierbei wird als Stabilisierungsbasis ein Arbeitspunkt 54 bzw. ein verhältnismässig kleiner Arbeitsbereich an einer der Flanken der Transmissionskurve 51 gewählt. Durch die betragsmässig relativ grosse Steigung im Arbeitspunkt 54 kann eine Abweichung der Absorption aus diesem Punkt 54 schnell und genau detektiert werden und auf Basis dieser Detektion eine Regelung der Laserdiode via Strom- und/oder Temperaturänderung erfolgen. Während dieser Art von Stabilisierung muss zur Beibehaltung eines konstanten Absorptionsverhaltens des Absorptionsmediums die Temperatur des Absorptionsmediums bzw. der Absorptionszelle im Wesentlichen konstant gehalten werden.

Figur 4 zeigt eine Ausführungsform eines regelbaren Lasermoduls für ein erfindungsgemässes Entfernungsmessgerät mit einer Laserstrahlquelle 61, einer Absorptionszelle 62 und einer Steuerung- und Auswerteeinheit 63. Die Laserstrahlquelle 61 ist hierbei als Laserdiode, z.B. als Distributed Feedback Laser (DFB) oder Distributed Bragg Reflector Laser (DBR), ausgeführt, wobei die emittierte Messstrahlung longitudinal monomodig und insbesondere mit einer Kohärenzlänge von mindestens 10m vorliegt. Mittels eines ersten Stahlteilers 64a wird die mit der Strahlquelle 61 erzeugte Laserstrahlung in die Messstrahlung 11 und eine Referenzstrahlung für die Stabilisierung aufgeteilt. Diese Referenzstrahlung wird wiederum mit einem zweiten Strahlteiler 64b aufgeteilt, wobei ein erster Anteil davon die Gaszelle 62 transmittiert und auf einen ersten Photodetektor 65 trifft. Ausserdem ist ein zweiter Photodetektor 66 zur Detektion eines zweiten Anteils der Referenzstrahlung vorgesehen. Die durch die beiden Photodetektoren 65,66 erzeugbaren Signale 65a,66a werden zur Regelung der Temperatur 63a (via TEC) und des Strom 63b (I) der Laserdiode mittels der Steuerung- und Auswerteeinheit 63 benutzt. Die Messstrahlung 11 kann in einer optischen Faser zum Lichttransport eingekoppelt oder als Freistrahl geführt werden. Zudem ist ein Isolator 67 vorgesehen.

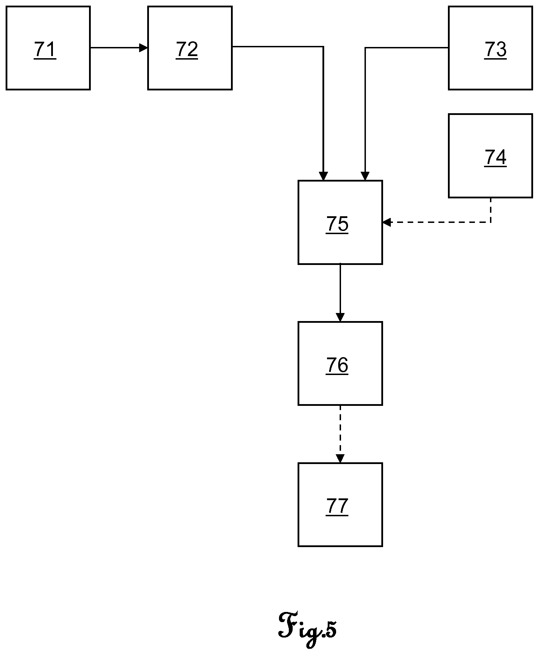

Figur 5 zeigt ein schematisches Blockdiagramm für den generellen Ablauf eines erfindungsgemässen Kalibrierens. Im Rahmen von Probemessungen 71 werden mit einem Entfernungsmessgerät, z.B. einem Lasertracker, Probemessergebnisse 72 produziert. Bei der Durchführung der Probemessungen 71 werden zumindest ein Messparameter (z.B. eine Entfernung zu einem Ziel oder die Emissionswellenlänge einer Laserdiode des Messgeräts) variiert und in Abhängigkeit des variierenden Messparameters die Ergebnisse 72 erzeugt. Diese Ergebnisse 72 können beispielsweise verkörpert sein durch zumindest eine Ausgangsgrösse, welche durch ein Interferometer des Entfernungsmessgeräts bereitgestellt wird. Weiters können die Ergebnisse 72 beispielsweise verkörpert sein durch ein mit einem Detektor des Entfernungsmessgeräts gemessenes Absorptionsspektrum bzw. durch in Abhängigkeit von der Emissionswellenlänge erfasste Absorptionsstärken.

Die bestimmten Probemessergebnisse 72 werden mit zumindest einer Referenz bzw. mit bekannten Vergleichswerten verglichen 75. Für diesen Vergleich 75 wird zumindest ein Linienatlas für ein bekanntes Absorptionsmedium einer Gaszelle, welche zur Stabilisierung der Emissionswellenlänge der Laserdiode vorgesehen ist, als Referenz 73 herangezogen, wobei der Linienatlas für jeweilige Emissionswellenlängen der Laserdiode innerhalb eines bestimmten Wellenlängenbereichs jeweilige Absorptionsstärken bzw. Absorptionsniveaus für das Absorptionsmedium angibt.

In Abhängigkeit der ausgeführten Probemessungen 71 und der Art der dabei generierten Messergebnisse 72 können für das Vergleichen 75 eine oder mehrere weitere Vergleichsgrössen 74 berücksichtigt werden. Werden im Rahmen der Probemessungen 71 Messungen in unterschiedlichen Entfernungen zu einem Ziel ausgeführt, so werden die Entfernungen zum Ziel als bekannte weitere Vergleichsgrössen 74 herangezogen. Diese Entfernungen können beispielsweise durch bestimmte Zielpositionen vorgegeben sein oder können z.B. durch einen zusätzlichen Entfernungsmesser jeweils bestimmt werden.

Im Rahmen des Vergleichens 75 erfolgen dann ein Abgleich der Probemessergebnisse 72 mit den jeweils relevanten Referenzen 73,74 und daraus eine Bestimmung einer Orientierung 76 im Linienatlas, d.h. durch ein Abgleichen zumindest des bekannten Absorptionsspektrums des Linienatlas mit den gemessenen Absorptionsstärken kann z.B. mittels eines "Best-Fit" ein bestes Übereinstimmen der gemessenen Absorptionswerte mit einem Bereich des Linienatlas identifiziert werden und damit eine Aussage über die bei den Probemessungen 71 vorliegende Emissionswellenlänge getroffen werden.

Auf Basis dieser bestimmten Orientierung 76 im Linienatlas kann in einem weiteren Schritt 77 die Emissionswellenlänge der Messstrahlung neu gesetzt werden bzw. die exakte Wellenlänge der Strahlung bestimmt werden. Hierbei kann eine Stabilisierung der Emissionswellenlänge durch ein fortlaufendes Messen einer Absorption und ein entsprechendes Regeln der Laserdiode (Strom und/oder Temperatur) erfolgen.

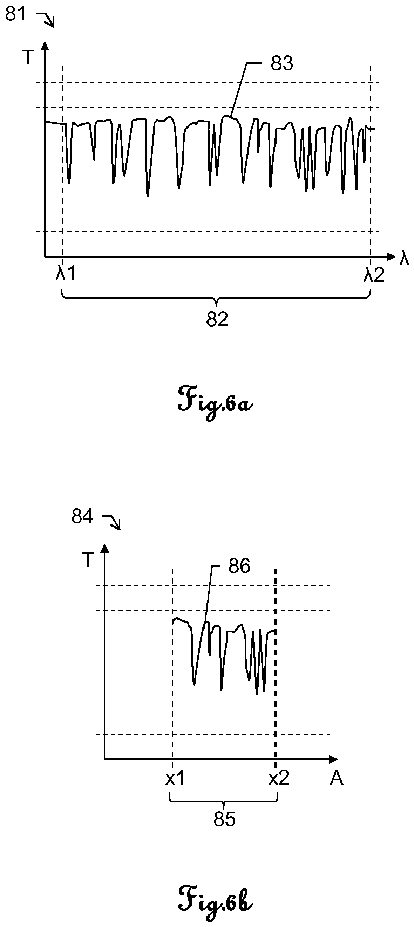

Die Figuren 6a-d zeigen eine erste Ausführung eines erfindungsgemässen Kalibrierens mit einem Entfernungsmessgerät mit Laserdiode, Absorptionszelle und Detektor zur Messung der Absorption (bzw. Transmission) der Messstrahlung an der Absorptionszelle.

Figur 6a zeigt einen Bereich eines bekannten Transmissionsspektrums 81 (Linienatlas) mit einem Transmissionsverhalten T für ein Absorptionsmedium innerhalb eines Wellenlängenbereichs 82 zwischen λ1 und A2. Eine Transmissionskurve 83 gibt dabei das Transmissions- bzw. Absorptionsverhalten des Absorptionsmediums (z.B. Jodgas) für eine mit dem Medium interagierende Strahlung in Abhängigkeit der Wellenlänge an. Ein derartiges Transmissionsspektrum kann als Linienatlas in einem erfindungsgemässen Entfernungsmessgerät in einem Speicher abgelegt sein und als Referenz herangezogen werden. Alternativ oder zusätzlich kann für das jeweilige Medium ein Absorptionsspektrum gespeichert sein, wobei der jeweilige Kurvenverlauf einer Absorptionskurve (auch der Transmissionskurve) von einer Kurvenpunktauflösung abhängen kann.

Die Figur 6b zeigt eine Probemessung 84, in deren Rahmen eine Emissionswellenlänge der Messstrahlung der Laserdiode durch Variation von Abstimmparametern A (z.B. Strom und/oder Temperatur) für die Diode innerhalb eines Bereichs 85 zwischen x1 und x2 variiert und dabei fortlaufend die Absorption mit einem Detektor erfasst wurde. Die Messtransmissionskurve 86 zeigt die dabei gemessen Absorption (= 1 - Transmission) in Abhängigkeit der Abstimmparameter A. Der Bereich 85, innerhalb dessen die Emissionswellenlänge variiert wird, stellt dabei einen Teilbereich des Wellenlängenbereichs 82, in welchem das Transmissionsspektrum 81 gemäss Figur 6a bekannt ist, hinsichtlich der Wellenlänge dar, d.h. x1 und x2 liegen innerhalb von λ1 und A2, wobei jedoch zunächst keine Wellenlängenabhängigkeit für die Messtransmissionskurve 86 gegeben ist.

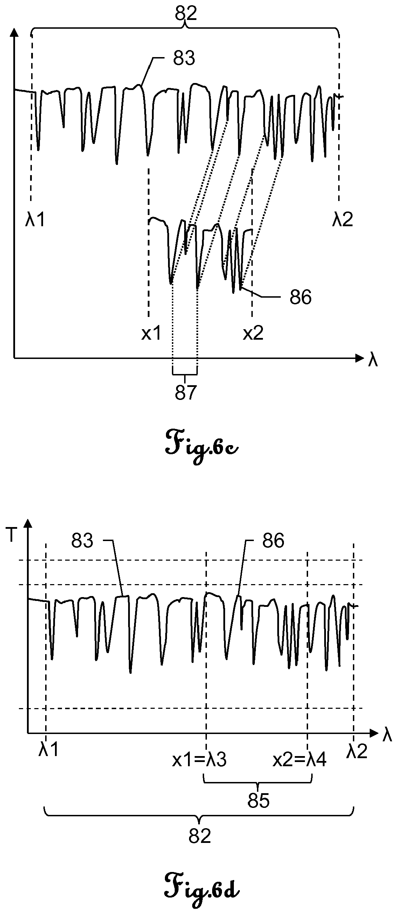

Figur 6c veranschaulicht ein erfindungsgemässes Vergleichen durch Abgleichen des bekannten Transmissionsspektrums 81 bzw. der bekannten Transmissionskurve 83 mit der gemessenen Messtransmissionskurve 86. Hierzu kann die Transmissionskurve 83 mit bekanntem Wellenlängenbereich 82 als Basis für den Vergleich herangezogen werden. Die Messtransmissionskurve 86 kann dann so mit der Transmissionskurve 83 abgeglichen werden, dass das gemessene Spektrum 86 möglichst gut mit der Referenzkurve 83 übereinstimmt. Dies kann z.B. mittels einer Kreuzkorrelation aus bekannter Transmissionskurve 83 und Messtransmissionskurve 86 oder mittels eines Vergleichs von jeweiligen Linienabständen 87 zwischen zwei bestimmten Absorptionslinien der Transmissionskurve 83 und Messtransmissionskurve 86 erfolgen.

Figur 6d zeigt ein Ergebnis des in Figur 6c dargestellten Abgleichungsvorgangs. Die im Rahmen der Probemessungen innerhalb des Bereichs 85 zwischen x1 und x2 erfasste Absorptionskurve 86 ist dabei mit der bekannten Transmissionskurve 83 derart abgeglichen worden, dass die Spektren (Transmission über Wellenlänge) im Bereich 85 weitestgehend übereinstimmen. Somit ist eine Orientierung im Linienatlas (bekanntes Transmissionsspektrum 81) bekannt und dem Bereich 85 können Wellenlängen zugeordnet werden (x1= A3 und x2= A4). Dadurch kann eine eindeutige Zuordnung der gemessenen Wellenlängen im Bereich 85 so erfolgen, dass zu jeweils gemessenen Absorptionsstärken jeweilige Wellenlängen innerhalb des Bereichs 85 zugeordnet werden können, und die Emissionswellenlänge der Messstrahlung exakt bestimmt werden. Das Variieren der Emissionswellenlänge kann hierfür so durchgeführt werden, dass während des Variierens zusätzlich Zeitpunkte zu erfassten Absorptionen erfasst werden und anhand dieser damit zeitlich erfassten Absorption auf eine jeweilige zu einem bestimmten Zeitpunkt gemessene Emissionswellenlänge geschlossen werden kann. Dadurch kann z.B. eine aktuelle vorliegende Wellenlänge durch die aktuell gemessene Absorption, die zeitliche Überwachung der Absorption und das vorangehende Abgleichen bestimmt werden. Insbesondere können in diesem Zusammenhang sowohl die Temperatur der Laserdiode als auch der an der Diode anliegende elektrische Strom berücksichtigt werden.

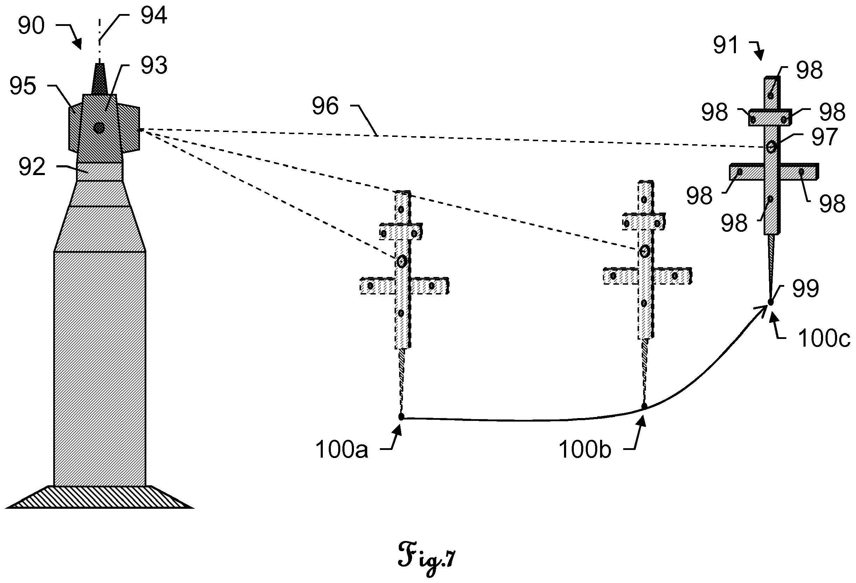

Figur 7 zeigt eine Ausführungsform für einen erfindungsgemässen Lasertracker 90 mit einem Messhilfsinstrument 91 mit Reflektor 97. Der Lasertracker 90 weist eine Basis 92 und eine Stütze 93 auf, wobei die Stütze 93 um eine durch die Basis 92 definierte Schwenkachse 94 (Stehachse) relativ zur Basis 92 schwenkbar bzw. rotierbar angeordnet ist. Zudem ist eine Anzieleinheit 95 derart an der Stütze 93 angeordnet, dass die Anzieleinheit 95 relativ zur Stütze 93 um eine Neigungsachse (Transitachse) schwenkbar ist. Durch eine so um zwei Achsen bereitgestellte Ausrichtungsmöglichkeit der Anzieleinheit 95 kann ein von dieser Einheit 95 emittierter Laserstrahl 96 flexibel ausgerichtet und damit Ziele angezielt werden. Die Schwenkachse 94 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Laserstrahl 96 auf den Reflektor 97 gerichtet und wird an diesem zurück zum Lasertracker 90 retro-reflektiert. Mittels dieses Messlaserstrahls 96 kann eine Entfernung zum Reflektor 97, insbesondere mittels Laufzeitmessung, mittels des Phasenmessprinzips oder mittels des Fizeau-Prinzips, bestimmt werden. Der Lasertracker 90 verfügt hierzu über eine Distanzmesseinheit (Absolutdistanzmesseinheit) zur Bestimmung dieser Entfernung zwischen dem Tracker 90 und dem Reflektor 97 und über Winkelmesser, die eine Stellung der Anzieleinheit 95, mittels derer der Laserstrahl 96 definiert ausgerichtet und geführt werden kann, und somit eine Ausbreitungsrichtung des Laserstrahls 96 bestimmbar machen. Zudem verfügt der Tracker 90 über eine Interferometereinheit zur Bestimmung von Entfernungsänderungen zu einem Ziel mittels Interferometrie.

Ausserdem weist der Lasertracker 90, insbesondere die Anzieleinheit 95, eine Bilderfassungseinheit zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor.

Weiters weist das Messhilfsinstrument 91 einen taktilen Sensor auf, dessen Kontaktpunkt 99 mit einem zu vermessenden Zielobjekt in Kontakt gebracht werden kann. Während dieser Kontakt zwischen dem Tastwerkzeug 91 und dem Zielobjekt besteht können eine Position des Kontaktpunktes 99 im Raum und damit die Koordinaten eines Punkts am Zielobjekt exakt bestimmt werden. Dieses Bestimmen erfolgt vermittels einer definierten relativen Positionierung des Kontaktpunkts 99 zum Reflektor 97 und zu am Messhilfsinstrument 91 angeordneten Markierungen 98, die beispielsweise als Leuchtdioden ausgebildet sein können. Alternativ können die Markierungen 98 auch derart ausgebildet sein, dass diese bei einem Beleuchten, z.B. mit Strahlung einer definierten Wellenlänge, die auftreffende Strahlung reflektieren (als Retroreflektoren ausgebildete Hilfspunkt-Markierungen 98), insbesondere eine bestimmte Leuchtcharakteristik zeigen, oder dass diese ein definiertes Muster oder Farbkodierung aufweisen. Aus der Lage bzw. Verteilung der Markierungen 98 in einem mit dem Sensor der Bilderfassungseinheit erfassten Bild kann somit eine Orientierung des Tastwerkzeugs 91 bestimmt werden.

In einer alternativen Ausführungsform (hier nicht gezeigt) weist ein erfindungsgemässer Lasertracker eine von der Bilderfassungseinheit separierte Strahlführungseinheit zur Emission des Laserstrahls auf, welcher ebenfalls auf den Reflektor 97 ausrichtbar ist. Sowohl der Laserstrahl als auch die Bilderfassungseinheit sind dabei jeweils um zwei Achsen motorisiert schwenkbar und können dadurch derart ausgerichtet werden, dass mittels der Bilderfassungseinheit das mit dem Laserstrahl angezielte Ziel 97 und die Markierungen 98 des Messhilfsinstruments 91 erfasst werden können.

Zur Ausrichtung des Laserstrahls 96 auf den Reflektor 97 sind am erfindungsgemässen Lasertrackern 90 jeweils Beleuchtungsmittel zur Beleuchtung des Reflektors 97 mit Strahlung einer bestimmten Wellenlänge, insbesondere im infraroten Wellenlängenbereich, vorgesehen und zusätzliche zumindest zwei Kameras mit positionssensitiven Detektoren an jedem Tracker 90 angeordnet. Die an dem Reflektor 97 reflektierte und zum Lasertracker 90 rückgestrahlte Beleuchtungsstrahlung kann mittels der Kameras detektiert und mit jedem der positionssensitiven Detektoren eine Position des Reflektors 97 auf dem jeweiligen Detektor abgebildet werden. Somit können sowohl mit dem Lasertracker 90 zwei abgebildete Positionen des Reflektors bestimmt und in Abhängigkeit dieser abgebildete Zielpositionen das Ziel (Reflektor 97) aufgefunden - z.B. nach allgemein bekannten Prinzipien der Photogrammetrie - und die Anzieleinheit 95 derart ausgerichtet werden, dass das Ziel mit dem Messstrahl 96 angezielt wird.

Zudem kann auf Basis jeweils zweier mit dem Lasertrackers 90 erfasster Bilder eine Grobposition des Reflektors bestimmt werden. Diese Position kann nach allgemeinen geometrischen bzw. trigonometrischen Grundsätzen, beispielsweise nach geometrischen Konstruktionsprinzipien von Dreiecken oder mittels Sinus- und/oder Kosinussatz, bestimmt werden. Ausserdem können zu der Grobpositionsbestimmung allgemein bekannte Methoden der Photogrammetrie (Stereophotogrammetrie) eingesetzt werden. Hierfür sind zudem die relativen Positionen und insbesondere Ausrichtungen der Kameras am Tracker 90 zueinander bekannt.

Die Beleuchtungsmittel und die Kameras können in diesem Zusammenhang z.B. an der Bilderfassungseinheit, der Strahlführungseinheit, der Anzieleinheit 95, der Stütze 93 oder der Basis 92 in jeweils definierten Positionen angeordnet sein.

Mittels der Kenntnis der Positionierung der Kameras relativ zu einer Emissionsrichtung des Laserstrahls 96 kann der Laserstrahl 96 auf die ermittelte Grobposition des Reflektors 97 ausgerichtet und an diesen angekoppelt werden (lock-on). Dadurch kann trotz eines konstruktiv bedingten Versatzes der Lasermissionsrichtung zu den Erfassungsrichtungen der Kameras eine schnelle Ausrichtung des Strahls 96 erfolgen und eine durch die optischen Achsen der Kameras und den Laserstrahl 96 gegebene Parallaxe gelöst werden. Im Speziellen kann der Laserstrahl 96 direkt, d.h. ohne einen iterativen Zwischenschritt, auf das Ziel 97 ausgerichtet werden.

Insbesondere kann - alternativ oder zusätzlich zur Bestimmung der Grobposition des Reflektors 97 - aus den auf den Detektoren (am Lasertracker 90) erfassten und abgebildeten Zielpositionen eine Grobentfernung zum Reflektor 97 bestimmt werden. Auch diese Bestimmung kann mittels allgemein gültiger geometrischer Grundsätze erfolgen, z.B. mittels des Höhensatzes für Dreiecke und/oder mittels Sinus- und/oder Kosinussatz.

Ausserdem kann ein erfindungsgemässes Ausrichten des Laserstrahls 96 auch bei Lasertrackern ohne Bilderfassungseinheit zur Orientierungsbestimmung (6-DoF Kamera) eines Messhilfsinstruments 91 Anwendung finden (3D-Lasertracker).

Ferner ist in Figur 7 ein Vorgehen für ein weiteres erfindungsgemässes Kalibrieren gezeigt. Hierzu werden Messung zum Messhilfsinstrument 91 mit unterschiedlichen Positionen 100a-c des Messhilfsinstruments 91 durchgeführt. Für jede Position 100a-c ist eine Entfernung zum Tracker 90 bekannt. Diese Entfernung kann beispielsweise jeweils durch eine Messung mit der Absolutdistanzmesseinheit bestimmt werden, wobei die Absolutdistanzmesseinheit eine weitere Laserstrahlquelle (zusätzlich zur Diode für die Erzeugung der Messstrahlung für das Interferometer) aufweist. Die von der Laserdiode erzeugte Messstrahlung für das Interferometer des Lasertrackers 90 wird dabei vermittels einer Wellenlängenstabilisierungseinheit (Absorptionszelle) auf eine Emissionswellenlänge stabilisiert und ist grob bekannt. Die dadurch vorgegebene Wellenlänge kann dabei wesentlich von den Betriebsparametern der Laserdiode (Strom und Temperatur) und von der Ansteuerelektronik für die Diode abhängen. Eine Stabilisierung auf eine feste Wellenlänge kann dadurch zwar erfolgen, jedoch muss für korrekte und zuverlässige Entfernungsmessungen (Messungen von Entfernungsänderungen mit dem Interferometer) zudem diese Wellenlänge betragsmässig bekannt sein. Zur Bestimmung bzw. für eine Neusetzung dieser Wellenlänge wird das Kalibrieren ausgeführt.

An zumindest zwei der Positionen 100a-c, insbesondere fortlaufend an einer Vielzahl von Positionen zwischen Position 100a und Position 100c, wird hierzu mittels des Interferometers des Lasertrackers 90 eine Interferometerausgangsgrösse bestimmt. Dabei wird der Reflektor 97 trackend verfolgt, d.h. der Messstrahl ist während dieses Messvorgangs dauernd auf den Reflektor 97 gerichtet. Diese Grösse kann z.B. eine Anzahl von Interferometerpulsen (Counts), die durch abwechselndes Erfassen von destruktiver und konstruktiver Interferenz gegeben sind und gezählt werden können, sein (z.B. homodynes Interferometer) oder durch eine Phasendifferenz zwischen einem Referenzsignal und einem Messsignal (z.B. heterodynes Interferometer). Zudem wird jeweils eine absolute Distanz zum Reflektor 97 gemessen bzw. ist gegeben. Die somit für jede Position gemessene Interferometerausgangsgrösse und die jeweilige Entfernung werden unter Berücksichtigung der jeweils grob bekannten Wellenlängen (für Absolutdistanzmesser und Interferometer) algorithmisch ausgewertet. Dadurch kann die vorliegende Wellenlänge für die Messstrahlung der Laserdiode sehr genau abgeschätzt werden. Insbesondere werden für diese Abschätzung atmosphärische Daten, wie z.B. Luftdruck, Luftfeuchte und Umgebungstemperatur, zusätzlich berücksichtigt. Auf Basis des Anschätzens der Emissionswellenlänge und mit Heranziehung eines Linienatlasses für das Absorptionsmedium der Wellenlängenstabilisierungseinheit wird eine Orientierung im Linienatlas bestimmt. Dadurch kann eine zur Stabilisierung verwendete Absorptionslinie des Absorptionsmediums identifiziert und damit die Emissionswellenlänge bestimmt werden.

Es versteht sich, dass diese dargestellten Figuren nur mögliche Ausführungsbeispiele schematisch darstellen. Die verschiedenen Ansätze können erfindungsgemäss ebenso miteinander sowie mit Stabilisierungs- und/oder Interferometrieverfahren, mit Verfahren zur Distanzbestimmung und mit gattungsgemässen Messgeräten, insbesondere Lasertrackern, des Stands der Technik kombiniert werden. Die erfindungsgemässen Aspekte können auch Anwendung finden in geodätischen Vermessungsgeräten wie z.B. Totalstationen und Tachymetern.

## Patentansprüche

1. Entfernungsmessgerät (1,90) zur Bestimmung einer Entfernungsänderung zu einem Objekt mit einem Interferometer (30) zur Erzeugung einer Interferometerausgangsgrösse für jeweilige Entfernungen zu dem Objekt mit
• einer als Interferometer-Laserstrahlquelle derart ausgebildeten abstimmbaren Laserdiode (10,61) zur Erzeugung einer Messstrahlung (11,96), dass die Messstrahlung (11,96) longitudinal monomodig vorliegt und eine Emissionswellenlänge der Messstrahlung (11,96) innerhalb eines bestimmten Wellenlängenbereichs (82,85) mittels Variation von zumindest einem Abstimmparameter modehop-frei variierbar ist,
• einem innerhalb des Wellenlängenbereichs (82,85) eine Vielzahl von bekannten Absorptionslinien definierenden Absorptionsmedium,
• einem Speicher mit einem innerhalb des Wellenlängenbereichs (82,85) für jeweilige Absorptionswellenlängen jeweils eine Absorptionsstärke angebenden gespeicherten Linienatlas (81) für das Absorptionsmedium,
• einem Detektor (65) zur Bestimmung der Absorptionsstärke, wobei der Detektor derart angeordnet ist, dass zumindest ein Teil der Messstrahlung das Absorptionsmedium transmittiert und auf den Detektor trifft, und
• einer derart ausgebildeten Steuerungs- und Auswerteeinheit (2), dass während einer Ausführung eines Entfernungsmessmodus eine Regelung der Emissionswellenlänge vermittels des zumindest einen Abstimmparameters in Abhängigkeit von der mit dem Detektor bestimmten Absorptionsstärke derart erfolgt, dass die Emissionswellenlänge stabil bleibt und damit die Entfernungsänderung zu dem Objekt mittels der Interferometerausgangsgrösse bestimmbar ist,
**dadurch gekennzeichnet, dass**
• die Steuerungs- und Auswerteeinheit (2) ferner derart ausgebildet ist, dass bei Ausführung eines Kalibrierungsmodus eine Orientierung im Linienatlas (81) zur Zuordnung der exakten Wellenlänge der Emissionswellenlänge dadurch erfolgt, dass
□ gesteuert durch die Steuerungs- und Auswerteeinheit (2) definierte Probemessungen (71,84) mit einem Variieren von zumindest einem Messparameter durchgeführt werden,
□ aus den Probemessungen (71,84) als Probemessergebnisse (72) die auf die Messstrahlung bewirkte Absorptionsstärke des Absorptionsmediums abgeleitet werden,
□ ein Vergleichen (75) der Probemessergebnisse (72) mit zumindest einer auf dem gespeicherten Linienatlas (81) basierenden und für die definierten Probemessungen (71) bekannten Referenz (73,74,83) erfolgt, wobei im Rahmen des Vergleichs die Probemessergebnisse (72) mit zumindest der Referenz (73,74,83) abgeglichen werden, und
□ in Abhängigkeit von dem Abgleichen und anhand eines algorithmischen Auswertens eine Identifikation eines Bereichs des Linienatlasses erfolgt, womit die Orientierung im Linienatlas (81) ermittelt wird (76), so dass die exakte Wellenlänge der Emissionswellenlänge der Messstrahlung (11,96) in Abhängigkeit von der Identifikation des Bereiches im Linienatlas (81) bestimmbar und/oder setzbar (77) ist,
• bei Ausführung des Kalibrierungsmodus gesteuert durch die Steuerungs- und Auswerteeinheit (2) im Rahmen der Probemessungen (71,84) mittels Variation des zumindest einen Abstimmparameters die Emissionswellenlänge als Messparameter variiert wird und dabei die Absorptionsstärke mittels des Detektors (65) fortlaufend erfasst wird.

2. Entfernungsmessgerät (1,90) nach Anspruch 1,
**dadurch gekennzeichnet, dass**
bei einem In-Betrieb-Nehmen des Entfernungsmessgeräts (1,90) automatisch gesteuert durch die Steuerungs- und Auswerteeinheit (2) der Kalibrierungsmodus ausgeführt wird und die dabei bestimmte Orientierung im Linienatlas (81) zur Ausführung des Messmodus gespeichert wird.

3. Entfernungsmessgerät (1,90) nach Anspruch 1 oder 2,
**dadurch gekennzeichnet, dass**
bei Ausführung des Kalibrierungsmodus durch die Steuerungs- und Auswerteeinheit (2) durch das fortlaufende Erfassen der Absorptionsstärke messparameterabhängige Probeabsorptionslinien als Probemessergebnisse (72) bestimmt werden, insbesondere wobei die Orientierung im Linienatlas in Abhängigkeit von einem Übereinstimmen der messparameterabhängigen Probeabsorptionslinien mit den bekannten Absorptionslinien bestimmt wird (76), insbesondere mittels einer Kreuzkorrelation aus den messparameterabhängigen Probeabsorptionslinien und den bekannten Absorptionslinien und/oder mittels Ausgleichsrechnung.

4. Entfernungsmessgerät (1,90) nach einem der Ansprüche 1 bis 3,
**dadurch gekennzeichnet, dass**
bei Ausführung des Kalibrierungsmodus durch die Steuerungs- und Auswerteeinheit (2)
• ein Abstandsvergleich von Abständen (87) der Probeabsorptionslinien mit bekannten Abständen der Absorptionslinien erfolgt und die Orientierung im Linienatlas unter Berücksichtigung des Abstandsvergleichs bestimmt wird (76) und/oder
• für jede Probeabsorptionslinie aus den messparameterabhängigen Probeabsorptionslinien die Absorptionsstärke bestimmt wird und die Orientierung im Linienatlas unter Berücksichtigung der bestimmten Absorptionsstärke bestimmt wird (76).

5. Entfernungsmessgerät (1,90) nach einem der Ansprüche 1 bis 4,
**dadurch gekennzeichnet, dass**
bei Ausführung des Kalibrierungsmodus
• im Rahmen der Probemessungen (71) eine Entfernung zum Objekt als weiterer Messparameter variiert wird,
• die Probemessungen (71) bei zumindest zwei unterschiedlichen, bekannten Entfernungen zum Objekt erfolgen,
• ein Bestimmen der Interferometerausgangsgrösse als Probemessergebnis (72) mit dem Interferometer (30) für jede der zumindest zwei unterschiedlichen Entfernungen zum Objekt erfolgt und
• das Ermitteln der Orientierung im Linienatlas (76), insbesondere eine Bestimmung der Emissionswellenlänge, basierend auf den bekannten Entfernungen, den Interferometerausgangsgrössen und der Vielzahl von bekannten Absorptionslinien erfolgt.

6. Entfernungsmessgerät (1,90) nach Anspruch 5,
**dadurch gekennzeichnet, dass**
das Entfernungsmessgerät (1,90) ferner eine Absolutdistanzmesseinheit (40) aufweist und die zumindest zwei unterschiedlichen, bekannten Entfernungen zum Objekt durch eine Entfernungsbestimmung mittels der Absolutdistanzmesseinheit (40) bestimmt werden.

7. Entfernungsmessgerät (1,90) nach einem der Ansprüche 1 bis 6,
**dadurch gekennzeichnet, dass**
das Entfernungsmessgerät (1,90) als Lasertracker (90) zur fortlaufenden Verfolgung des als Ziel (97) ausgebildeten Objekts und zur Positionsbestimmung des Ziels (97) ausgebildet ist, mit
• der Laserdiode (10,61) zur Erzeugung der Messstrahlung (11,96) mit einer Kohärenzlänge von mindestens 10m,
• einer eine Stehachse (94) definierenden Basis (92),
• einer Strahllenkeinheit zur Emission der Messstrahlung (11,96) und zum Empfang der am Ziel (97) reflektierten Messstrahlung, wobei die Strahllenkeinheit um die Stehachse (94) und eine im Wesentlichen orthogonal zur Stehachse (94) stehende Neigungsachse relativ zur Basis (92) motorisiert schwenkbar ist, und
• einer Winkelmessfunktionalität zur Bestimmung einer Ausrichtung der Strahllenkeinheit relativ zur Basis (92),
insbesondere wobei der Lasertracker (90) aufweist
• eine um die Stehachse (94) relativ zur Basis (92) motorisiert schwenkbare und die Neigungsachse definierende Stütze (93) und
• eine als Strahllenkeinheit ausgebildete, um die Neigungsachse relativ zur Stütze (93) motorisiert schwenkbare Anzieleinheit (95) mit einer Teleskopeinheit zur Emission der Messstrahlung (11,96) und zum Empfang von zumindest einem Teil der am Ziel (97) reflektierten Messstrahlung.

8. Entfernungsmessgerät (1,90) nach einem der Ansprüche 1 bis 7,
**dadurch gekennzeichnet, dass**
das Entfernungsmessgerät (1,90) eine das Absorptionsmedium aufweisende Absorptionszelle (20,62) aufweist, insbesondere wobei Jodgas das Absorptionsmedium bildet und die Emissionswellenlänge zwischen 500nm und 650nm, insbesondere zwischen 630nm und 635nm, liegt,
und/oder
die Emissionswellenlänge durch eine Änderung einer Temperatur der Laserdiode (10,61) als Abstimmparameter und/oder durch eine Änderung eines an der Laserdiode (10,61) anliegenden elektrischen Stroms als Abstimmparameter gesteuert durch die Steuerungs- und Auswerteeinheit (2) variierbar ist.

9. Entfernungsmessgerät (1,90) nach einem der Ansprüche 1 bis 8,
**dadurch gekennzeichnet, dass**
die Steuerungs- und Auswerteeinheit (2) derart ausgebildet ist, dass bei einem In-Betrieb-Nehmen des Entfernungsmessgeräts (1,90) für eine Einstellung der Emissionswellenlänge vorgesehene Abstimmparameter für die Laserdiode (10,61) derart gesetzt werden, dass durch die gesetzten Abstimmparameter ein vorheriger Betriebszustand im Wesentlichen reproduziert wird, insbesondere ein letzter vorheriger Betriebszustand im Wesentlichen reproduziert wird.

10. Entfernungsmessgerät (1,90) nach einem der Ansprüche 1 bis 9,
**dadurch gekennzeichnet, dass**
das Entfernungsmessgerät (1,90) einen Interferometer-Detektor zur Detektion der Messstrahlung (11,96) und zur darauf basierenden Erzeugung der Interferometerausgangsgrösse für jeweilige Entfernungen zu dem Objekt aufweist.

11. Kalibrierverfahren für und mit einem Interferometer (30) eines Entfernungsmessgeräts zur Bestimmung einer Entfernungsänderung zu einem Objekt mit
• einer als Interferometer-Laserstrahlquelle derart ausgebildeten abstimmbaren Laserdiode (10,61) zum Erzeugen einer Messstrahlung (11,96), dass die Messstrahlung (11,96) longitudinal monomodig vorliegt und eine Emissionswellenlänge der Messstrahlung (11,96) innerhalb eines bestimmten Wellenlängenbereichs (82,85) mittels Variation von zumindest einem Abstimmparameter modehop-frei variierbar ist,
• einem innerhalb des Wellenlängenbereichs (82,85) eine Vielzahl von bekannten Absorptionslinien definierenden Absorptionsmedium,
• einem Speicher mit einem innerhalb des Wellenlängenbereichs (82,85) für jeweilige Absorptionswellenlängen jeweils eine Absorptionsstärke angebenden gespeicherten Linienatlas (81) für das Absorptionsmedium und
• einem Detektor (65) zum Bestimmen der Absorptionsstärke, wobei der Detektor derart angeordnet ist, dass zumindest ein Teil der Messstrahlung das Absorptionsmedium transmittiert und auf den Detektor trifft,
**dadurch gekennzeichnet, dass**
• definierte Probemessungen (71) mit einem Variieren von zumindest einem Messparameter durchgeführt werden,
• aus den Probemessungen (71) als Probemessergebnisse (72) die auf die Messstrahlung bewirkte Absorptionsstärke des Absorptionsmediums abgeleitet werden,
• ein Vergleichen (75) der Probemessergebnisse (72) mit zumindest einer auf dem gespeicherten Linienatlas (81) basierenden und für die definierten Probemessungen (71) bekannten Referenz (73,74,83) erfolgt, wobei im Rahmen des Vergleichs (75) die Probemessergebnisse (72) mit zumindest der Referenz (73,74,83) abgeglichen werden,
• in Abhängigkeit von dem Abgleichen und anhand eines algorithmischen Auswertens eine Identifikation eines Bereichs des Linienatlasses erfolgt, womit eine Orientierung im Linienatlas (81) zur Zuordnung der exakten Wellenlänge der Emissionswellenlänge ermittelt wird (76), und
• die Emissionswellenlänge der Messstrahlung (11,96) als Messparameter variiert wird und dabei die Absorptionsstärke fortlaufend erfasst wird.

12. Kalibrierverfahren nach Anspruch 11,
**dadurch gekennzeichnet, dass**
• durch das fortlaufende Erfassen der Absorptionsstärke messparameterabhängige Probeabsorptionslinien als Probemessergebnisse (72) bestimmt werden und/oder
• die Orientierung im Linienatlas in Abhängigkeit von einem Übereinstimmen der messparameterabhängigen Probeabsorptionslinien mit den bekannten Absorptionslinien erfolgt (76), insbesondere mittels einer Kreuzkorrelation aus den messparameterabhängigen Probeabsorptionslinien und den bekannten Absorptionslinien und/oder mittels Ausgleichsrechnung.

13. Verfahren zum Bestimmen einer Entfernungsänderung zu einem Objekt mit einem Interferometer (30) eines Entfernungsmessgeräts zur Erzeugung einer Interferometerausgangsgrösse für jeweilige Entfernungen zu dem Objekt,
wobei
• ein Kalibrierverfahren nach Anspruch 11 oder 12 ausgeführt wird und
• in einem Entfernungsmessmodus
□ ein Regeln der Emissionswellenlänge vermittels des zumindest einen Abstimmparameters in Abhängigkeit von der Absorptionsstärke derart erfolgt, dass die Emissionswellenlänge während eines bestimmten Messintervalls stabil bleibt, wobei ein Bestimmen und/oder Setzen der Emissionswellenlänge (77) der Messstrahlung (11,96) in Abhängigkeit von der ermittelten Orientierung im Linienatlas (81) erfolgt, und
□ die Entfernungsänderung zu dem Objekt mittels der Interferometerausgangsgrösse bestimmt wird.

14. Verfahren nach einem der Ansprüche 11 bis 13,
**dadurch gekennzeichnet, dass**
• im Rahmen der Probemessungen (71) eine Entfernung zu einem Objekt als weiterer Messparameter variiert wird,
• die Probemessungen (71) bei zumindest zwei unterschiedlichen, bekannten Entfernungen zum Objekt erfolgen,
• ein Bestimmen der Interferometerausgangsgrösse als Probemessergebnis für jede der zumindest zwei unterschiedlichen Entfernungen zum Objekt mittels des Interferometers (30) erfolgt und
• die Orientierung im Linienatlas, insbesondere das Bestimmen und/oder Setzen der Emissionswellenlänge (77), basierend auf den bekannten Entfernungen, den Interferometerausgangsgrössen und der Vielzahl von bekannten Absorptionslinien erfolgt (76),
insbesondere wobei die zumindest zwei unterschiedlichen, bekannten Entfernungen zum Objekt durch ein Entfernungsbestimmen mittels einer Absolutdistanzmesseinheit (40) bestimmt werden.

15. Computerprogrammprodukt, das auf einem maschinenlesbaren Träger gespeichert ist,
• zur Steuerung des Durchführens von Probemessungen (71), und
• zur Ausführung
□ des Ableitens von Probemessergebnissen (72) aus den Probemessungen (71),
□ des Vergleichens der Probemessergebnisse (75) mit zumindest einer Vielzahl von bekannten Absorptionslinien,
□ des Bestimmens der Orientierung (76) im Linienatlas (81) und
□ des Bestimmens und/oder Setzens der Emissionswellenlänge (77)
eines Verfahrens nach einem der Ansprüche 11 bis 14, wenn das Computerprogrammprodukt auf einer Steuerungs - und Auswerteeinheit (2) eines Entfernungsmessgeräts (1,90) nach einem der Ansprüche 1 bis 10 ausgeführt wird.

## Claims

1. A rangefinder (1, 90) for determining a change in the distance to an object using an interferometer (30) for generating an interferometer output variable for the respective distances to the object, comprising
• a tunable laser diode (10, 61) embodied as an interferometer laser beam source for generating measurement radiation (11, 96) in such a way that the measurement radiation (11, 96) is present in longitudinally monomode fashion and an emission wavelength of the measurement radiation (11, 96) is variable in a mode hop-free fashion within a specific wavelength range (82, 85) by varying at least one tuning parameter,
• an absorption medium defining a multiplicity of known absorption lines within the wavelength range (82, 85),
• a memory with a stored line atlas (81) for the absorption medium, which line atlas in each case specifies an absorption strength for respective absorption wavelengths within the wavelength range (82, 85),
• a detector (65) for determining the absorption strength, wherein the detector is arranged such that at least part of the measurement radiation transmits the absorption medium and impinges on the detector, and
• a control and evaluation unit (2) embodied in such a way that, when a distance measuring mode is carried out, the emission wavelength is regulated in such a way by means of the at least one tuning parameter as a function of the absorption strength determined with the detector that the emission wavelength remains stable and therefore the change in the distance to the object can be determined by means of the interferometer output variable,
**characterized in that**
• the control and evaluation unit (2) is furthermore embodied in such a way that there is an orientation in the line atlas (81) to assign the exact wavelength of the emission wavelength when carrying out a calibration mode by virtue of
∘ defined sample measurements (71, 84) being carried out controlled by the control and evaluation unit (2) by varying at least one measurement parameter,
∘ the absorption strength of the absorption medium caused on the measuring radiation being derived as sample measurement results (72) from the sample measurements (71, 84),
∘ there being a comparison (75) of the sample measurement results (72) with at least one reference (73, 74, 83), which is based on the stored line atlas (81) and known for the defined sample measurements (71), wherein the sample measurement results (72) are compared to at least the reference (73, 74, 83) within the scope of the comparison, and
∘ a region of the line atlas being identified as a function of the comparison and on the basis of an algorithmic evaluation, with which the orientation in the line atlas (81) is established (76), such that the exact emission wavelength of the measurement radiation (11, 96) can be determined and/or set (77) as a function of the identified region in the line atlas (81),
• the emission wavelength as a measurement parameter is varied within the scope of the sample measurements (71, 84) by virtue of varying the at least one tuning parameter when carrying out the calibration mode in a manner controlled by the control and evaluation unit (2) and the absorption strength is acquired continuously in the process by means of the detector (65).

2. The rangefinder (1, 90) as claimed in claim 1,
**characterized in that**
the calibration mode is carried out when putting the rangefinder (1, 90) into operation, controlled automatically by the control and evaluation unit (2), and the orientation in the line atlas (81) determined in the process is stored for carrying out the measurement mode.

3. The rangefinder (1, 90) as claimed in claim 1 or 2,
**characterized in that**
measurement parameter-dependent sample absorption lines are determined as sample measurement results (72) when carrying out the calibration mode by the control and evaluation unit (2) by continuously acquiring the absorption strength,
in particular wherein the orientation in the line atlas is determined (76) as a function of a correspondence between the measurement parameter-dependent sample absorption lines and the known absorption lines, in particular by means of a cross correlation of the measurement parameter-dependent sample absorption lines and the known absorption lines and/or by means of a least squares adjustment, when carrying out the calibration mode by the control and evaluation unit (2).

4. The rangefinder (1, 90) as claimed in any one of claims 1 to 3,
**characterized in that**,
when the calibration mode is carried out by the control and evaluation unit (2),
• there is a distance comparison of distances (87) between the sample absorption lines with known distances between the absorption lines and the line atlas orientation is determined (76) taking into account the distance comparison and/or
• the absorption strength is determined for each sample absorption line from the measurement parameter-dependent sample absorption lines and the orientation in the line atlas is determined (76) taking into account the determined absorption strength.

5. The rangefinder (1, 90) as claimed in any one of claims 1 to 4,
**characterized in that**,
when the calibration mode is carried out,
• a distance to the object is varied as a further measurement parameter within the scope of the sample measurements (71),
• the sample measurements (71) are carried out at at least two different, known distances to the object,
• the interferometer output variable is determined as sample measurement result (72) using the interferometer (30) for each one of the at least two different distances to the object and
• the orientation in the line atlas (76) is established, in particular the emission wavelength is determined, on the basis of the known distances, the interferometer output variables and the multiplicity of known absorption lines.

6. The rangefinder (1, 90) as claimed in claim 5,
**characterized in that**
the rangefinder (1, 90) furthermore comprises an absolute distance measurement unit (40) and the at least two different, known distances to the object are determined by determining the distance by means of the absolute distance measurement unit (40).

7. The rangefinder (1, 90) as claimed in any one of claims 1 to 6,
**characterized in that**
the rangefinder (1, 90) is embodied as a laser tracker (90) for continuous tracking of the object embodied as a target (97) and for determining the position of the target (97), comprising
• the laser diode (10, 61) for generating the measurement radiation (11, 96) with a coherence length of at least 10 m,
• a base (92) defining a vertical axis (94),
• a beam guiding unit for emitting the measurement radiation (11, 96) and for receiving the measurement radiation reflected at the target (97), wherein the beam guiding unit can be pivoted in a motor-driven manner relative to the base (92) about the vertical axis (94) and an inclination axis which is substantially orthogonal to the vertical axis (94), and
• an angle measurement functionality for determining an alignment of the beam guiding unit relative to the base (92),
in particular wherein the laser tracker (90) comprises
• a support (93) which can be pivoted in a motor-driven manner about the vertical axis (94) relative to the base (92) and which defines the inclination axis and
• a targeting unit (95), which is embodied as a beam guiding unit and can be pivoted in a motor-driven manner about the inclination axis relative to the support (93), comprising a telescopic unit for emitting the measurement radiation (11, 96) and for receiving at least part of the measurement radiation reflected at the target (97).

8. The rangefinder (1, 90) as claimed in any one of claims 1 to 7,
**characterized in that**
the rangefinder (1, 90) comprises an absorption cell (20, 62) comprising the absorption medium, in particular wherein iodine gas forms the absorption medium and the emission wavelength lies between 500 nm and 650 nm, in particular between 630 nm and 635 nm,
and/or
the emission wavelength is variable in a manner controlled by the control and evaluation unit (2) by modifying a temperature of the laser diode (10, 61) as tuning parameter and/or by modifying an electric current applied to the laser diode (10, 61) as tuning parameter.

9. The rangefinder (1, 90) as claimed in any one of claims 1 to 8,
**characterized in that**
the control and evaluation unit (2) is embodied in such a way that tuning parameters for the laser diode (10, 61), provided for setting the emission wavelength, are set in such a way when the rangefinder (1, 90) is put into operation that a previous operating state is substantially reproduced by the set tuning parameters, in particular that a last previous operating state is substantially reproduced.

10. The rangefinder (1, 90) as claimed in any one of claims 1 to 9,
**characterized in that**
the rangefinder (1, 90) comprises an interferometer detector for detecting the measurement radiation (11, 96) and for generating the interferometer output variable, based thereon, for the respective distances to the object.

11. A calibration method for and with an interferometer (30) of a rangefinder for determining a change in the distance to an object, comprising
• a tunable laser diode (10, 61) embodied as an interferometer laser beam source for generating measurement radiation (11, 96) in such a way that the measurement radiation (11, 96) is present in longitudinally monomode fashion and an emission wavelength of the measurement radiation (11, 96) is variable in a mode hop-free fashion within a specific wavelength range (82, 85) by varying at least one tuning parameter,
• an absorption medium defining a multiplicity of known absorption lines within the wavelength range (82, 85),
• a memory with a stored line atlas (81) for the absorption medium, which line atlas in each case specifies an absorption strength for respective absorption wavelengths within the wavelength range (82, 85), and
• a detector (65) for determining the absorption strength, wherein the detector is arranged such that at least part of the measurement radiation transmits the absorption medium and impinges on the detector,
**characterized in that**
• defined sample measurements (71) are carried out by varying at least one measurement parameter,
• the absorption strength of the absorption medium caused on the measuring radiation is derived as sample measurement results (72) from the sample measurements (71),
• there is a comparison (75) of the sample measurement results (72) with at least one reference (73, 74, 83), which is based on the stored line atlas (81) and known for the defined sample measurements (71), wherein the sample measurement results (72) are compared to at least the reference (73, 74, 83) within the scope of the comparison (75),
• a region of the line atlas is identified as a function of the comparison and on the basis of an algorithmic evaluation, with which an orientation in the line atlas (81) is established (76), such that the exact wavelength of the emission wavelength is determined, and
• the emission wavelength of the measurement radiation (11, 96) is varied as a measurement parameter and, in the process, the absorption strength is acquired continuously.

12. The calibration method as claimed claim 11,
**characterized in that**
• measurement parameter-dependent sample absorption lines are determined as sample measurement results (72) by the continuous acquisition of the absorption strength and/or
• the orientation in the line atlas is brought about (76) as a function of a correspondence of the measurement parameter-dependent sample absorption lines with the known absorption lines, in particular by means of a cross correlation of the measurement parameter-dependent sample absorption lines and the known absorption lines and/or by means of a least squares adjustment.

13. A method for determining a change in the distance to an object using an interferometer (30) of a rangefinder for generating an interferometer output variable for the respective distances to the object,
wherein
• a calibration method as claimed in claim 11 or 12 is carried out and,
• in a distance measurement mode,
∘ the emission wavelength is regulated as a function of the absorption strength by means of the at least one tuning parameter in such a way that the emission wavelength remains stable during a specific measurement interval, wherein the emission wavelength (77) of the measurement radiation (11, 96) is determined and/or set as a function of the established orientation in the line atlas (81) and
∘ the change in the distance to the object is determined by means of the interferometer output variable.

14. The method as claimed in any one of claims 11 to 13,
**characterized in that**
• a distance to an object is varied as a further measurement parameter within the scope of the sample measurements (71),
• the sample measurements (71) are carried out at at least two different, known distances to the object,
• the interferometer output variable is determined as sample measurement result using the interferometer (30) for each one of the at least two different distances to the object and
• the orientation in the line atlas, in particular the determining and/or setting of the emission wavelength (77), is brought about (76) on the basis of the known distances, the interferometer output variables and the multiplicity of known absorption lines,
in particular wherein the at least two different, known distances to the object are determined by determining the distance by means of an absolute distance measurement unit (40).

15. A computer program product, which is stored in a machine readable medium,
• for controlling the carrying out of sample measurements (71) and
• for carrying out
∘ the derivation of sample measurement results (72) from the sample measurements (71),
∘ the comparison of the sample measurement results (75) with at least a multiplicity of known absorption lines,
∘ the determination of the orientation (76) in the line atlas (81) and
∘ the determination and/or setting of the emission wavelength (77)
of a method as claimed in any one of claims 11 to 14, if the computer program product is executed in a control and evaluation unit (2) of a rangefinder (1, 90) as claimed in any one of claims 1 to 10.

## Revendications

1. Appareil de télémétrie (1, 90) pour déterminer une variation de distance par rapport à un objet avec un interféromètre (30) pour générer une grandeur de sortie d'interféromètre pour des distances respectives par rapport à l'objet avec
• une diode laser accordable (10, 61) configurée comme source de faisceaux laser d'interféromètre pour produire un rayonnement de mesure (11, 96) de telle manière que le rayonnement de mesure (11, 96) est longitudinalement monomode et qu'une longueur d'onde d'émission du rayonnement de mesure (11, 96) peut être variée sans saut de mode à l'intérieur d'une plage de longueur d'onde déterminée (82, 85) au moyen d'une variation d'au moins un paramètre d'accord,
• un milieu d'absorption qui définit une multitude de lignes d'absorption connues à l'intérieur de la plage de longueur d'onde (82, 85),
• une mémoire avec un atlas de lignes mémorisé (81) pour le milieu d'absorption qui indique respectivement une force d'absorption à l'intérieur de la plage de longueur d'onde (82, 85) pour des longueurs d'onde d'absorption respectives,
• un détecteur (65) pour déterminer la force d'absorption, le détecteur " étant placé de telle manière qu'au moins une partie du rayonnement de mesure transmet le milieu d'absorption et atteint le détecteur, et
• une unité de commande et d'évaluation (2) configurée de telle manière qu'un réglage de la longueur d'onde d'émission est effectué pendant la réalisation d'un mode de mesure de distance au moyen du au moins un paramètre d'accord en fonction de la force d'absorption déterminée avec le détecteur de telle manière que la longueur d'onde d'émission reste stable et que la variation de distance par rapport à l'objet peut être déterminée au moyen de la valeur de sortie de l'interféromètre,
**caractérisé en ce que**
• l'unité de commande et d'évaluation (2) est de plus configurée de telle manière que, lors de la réalisation d'un mode de calibrage, une orientation dans l'atlas de lignes (81) se fait pour l'affectation de la longueur d'onde exacte de la longueur d'onde d'émission par le fait
□ que des mesures d'échantillons (71, 84) définies sont exécutées avec une variation d'au moins un paramètre de mesure, ceci étant commandé par l'unité de commande et d'évaluation (2),
□ que la force d'absorption du milieu d'absorption entraînée sur le rayonnement de mesure est dérivée des mesures d'échantillons (71, 84) en tant que résultats de mesure d'échantillons (72),
□ qu'une comparaison (75) des résultats de mesure d'échantillons (72) avec au moins une référence connue (73, 74, 83) pour les mesures d'échantillons définies (71) et se basant sur l'atlas de lignes (81) mémorisé est effectuée, cependant que les résultats de mesure d'échantillons (72) sont recoupés avec au moins la référence (73, 74, 83) dans le cadre de la comparaison et
□ qu'en fonction du recoupement et à l'aide de l'analyse algorithmique une identification d'une zone de l'atlas de lignes est effectuée avec laquelle l'orientation dans l'atlas de lignes (81) est déterminée (76) si bien que la longueur d'onde exacte de la longueur d'onde d'émission du rayonnement de mesure (11, 96) peut être déterminée et/ou fixée en fonction de l'identification de la zone dans l'atlas de lignes (81),
• la longueur d'onde d'émission est variée en tant que paramètre de mesure lors de l'exécution du mode de calibrage, ceci étant commandé par l'unité de commande et d'évaluation (2) dans le cadre des mesures d'échantillons (71, 84), au moyen de la variation du au moins - un paramètre d'accord et la force d'absorption est alors détectée en continu au moyen du détecteur (65).

2. Appareil de télémétrie (1, 90) selon la revendication 1, **caractérisé en ce que** le mode calibrage est exécuté lors d'une mise en service de l'appareil de télémétrie (1, 90) en étant commandé automatiquement par l'unité de commande et d'évaluation (2) et l'orientation qui est alors déterminée est mémorisée dans l'atlas de lignes (81) pour l'exécution du mode mesure.

3. Appareil de télémétrie (1, 90) selon la revendication 1 ou 2, **caractérisé en ce que**, lors de l'exécution du mode calibrage par l'unité de commande et d'évaluation (2,) des lignes d'absorption d'échantillons qui dépendent des paramètres de mesure sont déterminées comme des résultats de mesure d'échantillons (72) par la détection continue de la force d'absorption, en particulier cependant que l'orientation dans l'atlas de lignes est déterminée (76) en fonction d'une coïncidence des lignes d'absorption d'échantillons qui dépendent des paramètres de mesure avec les lignes d'absorption connues, en particulier au moyen d'une corrélation croisée des lignes d'absorption d'échantillons qui dépendent des paramètres de mesure et des lignes d'absorption connues et/ou par calcul de compensation.

4. Appareil de télémétrie (1, 90) selon l'une des revendications 1 à 3, **caractérisé en ce que**, lors de l'exécution du mode calibrage par l'unité de commande et d'évaluation (2)
• une comparaison de distances (7) des lignes d'absorption d'échantillons a lieu avec des distances connues des lignes d'absorption et l'orientation dans l'atlas de lignes est déterminée (76) en tenant compte de la comparaison des distances et/ou
• la force d'absorption est déterminée pour chaque ligne d'absorption d'échantillons à partir des lignes d'absorption d'échantillons qui dépendent des paramètres de mesure et l'orientation dans l'atlas de lignes est déterminée (76) en tenant compte de la force d'absorption déterminée.

5. Appareil de télémétrie (1, 90) selon l'une des revendications 1 à 4, **caractérisé en ce que**, lors de l'exécution du mode calibrage
• dans le cadre des mesures d'échantillons (71) une distance par rapport à l'objet est variée comme paramètre de mesure supplémentaire,
• les mesures d'échantillons (71) se font pour au moins deux distances connues différentes par rapport à l'objet,
• une détermination de la valeur de sortie de l'interféromètre se fait comme résultat de mesure d'échantillons (72) avec l'interféromètre (30) pour chacune des au moins deux distances différentes par rapport à l'objet et
• la détermination de l'orientation dans l'atlas de lignes (76), en particulier une détermination de la longueur d'onde d'émission, se fait sur la base des distances connues, des valeurs de sortie de l'interféromètre et de la multitude de lignes d'absorption connues.

6. Appareil de télémétrie (1, 90) selon la revendication 5, **caractérisé en ce que** l'appareil de télémétrie (1, 90) présente de plus une unité de mesure de distance absolue (40) et que les au moins deux distances différentes connues par rapport à l'objet sont déterminées par une détermination de distance au moyen de l'unité de mesure de distance absolue (40).

7. Appareil de télémétrie (1, 90) selon l'une des revendications 1 à 6, **caractérisé en ce que** l'appareil de télémétrie (1, 90) est configuré comme appareil de suivi laser (90) pour le suivi continu de l'objet configuré comme cible (97) et pour la détermination de la position de la cible (97) avec
• la diode laser (10, 61) pour produire le rayonnement de mesure (11, 96) avec une longueur de cohérence d'au moins 10 m,
• une base (92) qui définit un axe vertical (94),
• une unité de déviation des faisceaux pour l'émission du rayonnement de mesure (11, 96) et pour la réception du rayonnement de mesure réfléchi sur la cible (97), cependant que l'unité de déviation des faisceaux est pivotante de manière motorisée par rapport à la base (92) autour de l'axe vertical (94) et d'un axe d'inclinaison qui est substantiellement orthogonal par rapport à l'axe perpendiculaire (94) et
• une fonctionnalité de mesure d'angle pour la détermination d'une orientation de l'unité de déviation des faisceaux par rapport à la base (92),
en particulier, cependant que l'appareil de suivi laser (90) présente
• un support (93) pivotant de manière motorisée par rapport à la base (92) autour de l'axe vertical (94) et qui définit l'axe d'inclinaison et
• une unité de visée (95), configurée comme unité de déviation des faisceaux, pivotante de manière motorisée par rapport au support (93) avec une unité de télescope pour l'émission de rayonnement de mesure (11, 96) et pour la réception d'au moins une partie du rayonnement de mesure réfléchi sur la cible (97).

8. Appareil de télémétrie (1, 90) selon l'une des revendications 1 à 7, **caractérisé en ce que** l'appareil de télémétrie (1, 90) présente une cellule d'absorption (20, 62) qui présente le milieu d'absorption, en particulier cependant que du gaz d'iode forme le milieu d'absorption et la longueur d'onde d'émission se situe entre 500 nm et 650 nm, en particulier entre 630 nm et 635 nm
et/ou
la longueur d'onde d'émission est variable par un changement de température de la diode laser (10, 61) comme paramètre d'accord et/ou par un changement de courant électrique présent sur la diode laser (10, 61) comme paramètre d'accord, ceci étant commandé par l'unité de commande et d'évaluation (2).

9. Appareil de télémétrie (1, 90) selon l'une des revendications 1 à 8, **caractérisé en ce que** l'unité de commande et d'évaluation (2) est configuré de telle manière que lors d'une mise en service de l'appareil de télémétrie (1, 90) des paramètres d'accord pour la diode laser (10, 61) prévus pour un réglage de la longueur d'onde d'émission sont fixés de telle manière qu'un état de fonctionnement précédent est substantiellement reproduit par les paramètres d'accord fixés, en particulier qu'un dernier état de fonctionnement précédent est substantiellement reproduit.

10. Appareil de télémétrie (1, 90) selon l'une des revendications 1 à 9, **caractérisé en ce que** l'appareil de télémétrie (1, 90) présente un détecteur à interféromètre pour la détection du rayonnement de mesure (11, 96) et pour la production de la valeur de sortie de l'interféromètre sur cette base pour des distances respectives par rapport à l'objet.

11. Procédé de calibrage pour et avec un interféromètre (30) d'un appareil de télémétrie pour la détermination d'un changement de distance par rapport à un objet avec
• une diode laser accordable (10, 61) configurée comme source de faisceaux laser d'interféromètre pour produire un rayonnement de mesure (11, 96) de telle manière que le rayonnement de mesure (11, 96) est longitudinalement monomode et qu'une longueur d'onde d'émission du rayonnement de mesure (11, 96) est variable sans saut de mode à l'intérieur d'une plage de longueur d'onde déterminée (82, 85) au moyen d'une variation d'au moins un paramètre d'accord,
• un milieu d'absorption qui définit une multitude de lignes d'absorption connues à l'intérieur de la plage de longueur d'onde (82, 85),
• une mémoire avec un atlas de lignes mémorisé (81) pour le milieu d'absorption qui indique respectivement une force d'absorption à l'intérieur de la plage de longueur d'onde (82, 85) pour des longueurs d'onde d'absorption respectives et
• un détecteur (65) pour déterminer la force d'absorption, le détecteur étant placé de telle manière qu'au moins une partie du rayonnement de mesure transmet le milieu d'absorption et atteint le détecteur,
**caractérisé en ce que**
• des mesures d'échantillons (71, 84) définies sont exécutées avec une variation d'au moins un paramètre de mesure,
• la force d'absorption du milieu d'absorption entraînée sur le rayonnement de mesure est dérivée des mesures d'échantillons (71, 84) en tant que résultats de mesure d'échantillons (72),
• une comparaison (75) des résultats de mesure d'échantillons (72) avec au moins une référence connue (73, 74, 83) pour les mesures d'échantillons définies (71) et se basant sur l'atlas de lignes (81) mémorisé est effectuée, cependant que les résultats de mesure d'échantillons (72) sont recoupés avec au moins la référence (73, 74, 83) dans le cadre de la comparaison (75),
• qu'en fonction du recoupement et à l'aide d'une analyse algorithmique une identification d'une zone de l'atlas de lignes a lieu avec laquelle une orientation dans l'atlas de lignes (81) est déterminée (76) pour l'affectation de la ligne d'onde exacte de la longueur d'onde d'émission, et
• la longueur d'onde d'émission du rayonnement de mesure (11, 96) est variée en tant que paramètre de mesure tout en détectant en continu la force d'absorption.

12. Procédé de calibrage selon la revendication 11, **caractérisé en ce que**
• des lignes d'absorption d'échantillons qui dépendent des paramètres de mesure sont déterminées comme des résultats de mesure d'échantillons (72) par la détection continue de la force d'absorption et/ou
• l'orientation dans l'atlas de lignes se fait en fonction d'une concordance des lignes d'absorption d'échantillons qui dépendent des paramètres de mesure avec les lignes d'absorption connues (76), en particulier au moyen d'une corrélation croisée des lignes d'absorption d'échantillons qui dépendent des paramètres de mesure et des lignes d'absorption connues et/ou par calcul de compensation.

13. Procédé pour déterminer un changement de distance par rapport à un objet avec un interféromètre (30) d'un appareil de télémétrie pour produire une valeur de sortie d'interféromètre pour des distances respectives par rapport à l'objet, cependant
• qu'un procédé de calibrage selon la revendication 11 ou 12 est exécuté et
• que dans un mode de mesure de distance
□ un'réglage de la longueur d'onde d'émission a lieu au moyen du au moins un paramètre d'accord en fonction de la force d'absorption de telle manière que la longueur d'onde d'émission reste stable pendant un intervalle de mesure déterminé, cependant qu'une détermination et/ou fixation de la longueur d'onde d'émission (77) du rayonnement de mesure (11, 96) est effectuée en fonction de l'orientation détectée dans l'atlas de lignes (81) et
□ le changement de distance par rapport à l'objet est déterminé au moyen de la valeur de sortie de l'interféromètre.

14. Procédé selon l'une des revendications 11 à 13, **caractérisé en ce que**
• dans le cadre des mesures d'échantillons (71) une distance par rapport à un objet est variée comme paramètre de mesure supplémentaire,
• les mesures d'échantillons (71) se font pour au moins deux différentes distances connues par rapport à l'objet,
• une détermination de la valeur de sortie de l'interféromètre se fait comme résultat de mesure d'échantillon pour chacune des au moins deux distances différentes par rapport à l'objet au moyen de l'interféromètre (30) et
• l'orientation dans l'atlas de lignes, en particulier la détermination et/ou la fixation de la longueur d'onde d'émission (77) se fait sur la base des distances connues, des valeurs de sortie de l'interféromètre et de la multitude de lignes d'absorption connues (76),
en particulier cependant que les au moins deux distances différentes connues par rapport à l'objet sont déterminées par une détermination de distance au moyen d'une unité de mesure de distance absolue (40).

15. Produit programme d'ordinateur qui est mémorisé sur un support lisible par machine
• pour la commande de l'exécution de mesures d'échantillons (71) et
• pour l'exécution
- de la dérivation de résultats de mesures d'échantillons (72) à partir des mesures d'échantillons (71),
- de la comparaison des résultats de mesures d'échantillons (75) avec au moins une multitude de lignes d'absorption connues,
- de la détermination de l'orientation (76) dans l'atlas de lignes (81) et
- de la détermination et/ou de la fixation de la longueur d'onde d'émission (77)
d'un procédé selon l'une des revendications 11 à 14, lorsque le produit programme d'ordinateur est exécuté sur une unité de commande et d'évaluation (2) d'un appareil de télémétrie (1, 90) selon l'une des revendications 1 à 10.
